# FASCICULE DE BREVET EUROPEEN

(11) **EP 3 160 116 B1**
(45) Date de publication et mention de la délivrance du brevet: **25.07.2018**
(21) Numéro de dépôt: 16194594.4
(22) Date de dépôt: 19.10.2016
(51) Int. Cl.: H04M 1/725, H04W 12/04, H04W 88/04

(54) **PROCÉDÉ D'APPAIRAGE AUTOMATIQUE D'UNE PLURALITÉ DE TERMINAUX SANS FIL À UN POINT D'ACCÈS RÉSEAU**
VERFAHREN ZUR AUTOMATISCHEN PAARUNG VON MEHREREN DRAHTLOSEN ENDGERÄTEN MIT EINEM WLAN-ZUGANGSPUNKT
METHOD FOR AUTOMATICALLY PAIRING A PLURALITY OF WIRELESS TERMINALS TO A NETWORK ACCESS POINT

(30) Priorité: 23.10.2015 FR 1560118
(43) Date de publication de la demande: 26.04.2017
(73) Titulaire: Sagemcom Broadband SAS, 92500 Rueil-Malmaison (FR)
(72) Inventeur: JAULIN, Jean-Philippe, 92500 Rueil-Malmaison (FR); GUILCHER, Hoel, 92500 Rueil-Malmaison (FR)
(74) Mandataire: Cabinet Camus Lebkiri

(56) Documents cités:
- WO-A1-2013/180860
- WO-A1-2014/163877
- WO-A1-2015/091327
- ETSI: "Digital Enhanced Cordless Telecommunications (DECT);Common Interface (CI);Part 6: Identities and addressing - ETSI EN 300 175-6 V1.7.1 (2003-07)", ETSI , 31 juillet 2003 (2003-07-31), XP002757640, Extrait de l'Internet: URL:http://www.etsi.org/deliver/etsi_en/30 0100_300199/30017506/01.07.01_60/en_300175 06v010701p.pdf [extrait le 2016-05-12]
- Anonymous: "Bluetooth | Android Developers", , 16 April 2015 (2015-04-16), XP055444540, Retrieved from the Internet: URL:http://web.archive.org/web/20150416045 924/https://developer.android.com/guide/to pics/connectivity/bluetooth.html [retrieved on 2018-01-25]

## Description

### DOMAINE TECHNIQUE DE L'INVENTION

Le domaine technique de l'invention est celui de la communication sans fil. La présente invention concerne un procédé d'appairage automatique d'une pluralité de terminaux sans fil à un point d'accès réseau.

### ARRIERE-PLAN TECHNOLOGIQUE DE L'INVENTION

Les produits de communication sans fil comportent en général un ou plusieurs terminaux, et un point d'accès réseau. Les terminaux peuvent être fixes ou mobiles. Un terminal est par exemple une station ST selon le protocole Wi-Fi, ou un combiné PP selon le protocole DECT (de l'anglais « Digital Enhanced Cordless Telephone »). Un point d'accès réseau est par exemple un point d'accès AP selon le protocole Wi-Fi, ou une base FP selon le protocole DECT. D'autres protocoles de communication sans fil, et notamment de communication sans fil radio numérique, sont par exemple le protocole Bluetooth ou le protocole ZigBee. L'établissement d'une communication entre un ou plusieurs terminaux d'une part, et un point d'accès réseau d'autre part, nécessite une opération d'appairage préalable de chaque terminal avec le point d'accès réseau. Le procédé complet d'appairage devant être implémenté dans le cas d'un système de communication sans fil DECT est défini par les normes ETSI EN 300 175, parties 1 à 8, et ETSI 300 444. Ce procédé d'appairage est mis en oeuvre dans l'ensemble des terminaux et points d'accès réseau DECT présents sur le marché. Ce procédé d'appairage est déclenché par une ou plusieurs opérations d'un utilisateur sur au moins un terminal et/ou le point d'accès réseau, ce qui peut se révéler complexe notamment dans le cas de terminaux et/ou point d'accès réseau peu intuitifs.

La majorité des systèmes de communication est donc livrée à l'utilisateur dans un état où le ou les terminaux sont pré-appairés avec le point d'accès réseau. Il existe toutefois des systèmes de communication pour lesquels le point d'accès réseau est livré « nu ». Pour de tels systèmes de communication, les terminaux ne peuvent donc pas être pré-appairés avec le point d'accès réseau. Un utilisateur devra donc appairer lui-même avec le point d'accès réseau le ou les terminaux qu'il aura acquis séparément.

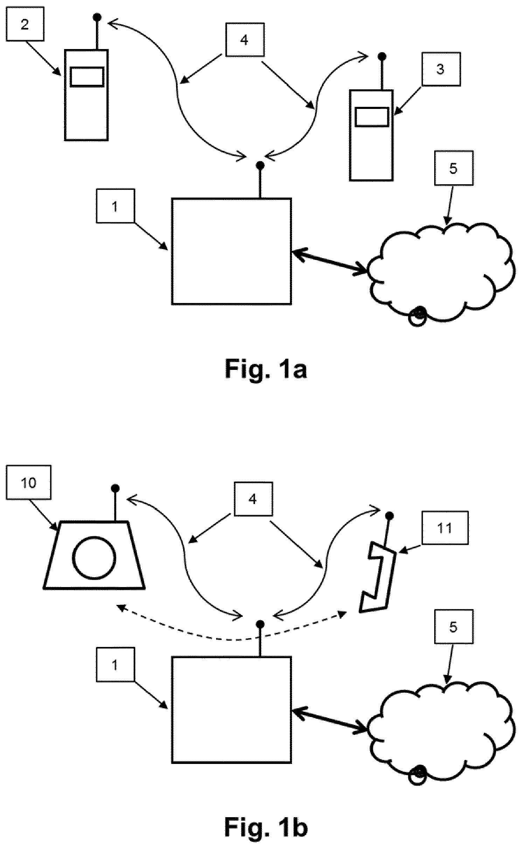

La figure 1a montre par exemple un système de communication comportant :
- un point d'accès réseau 1 raccordé à un réseau 5 qui est par exemple un réseau de téléphonie vocale ;
- un premier terminal sans fil 2 et un deuxième terminal sans fil 3 aptes à communiquer avec le point d'accès réseau 1 au moyen d'une liaison radiofréquence 4.

Dans le cas général du système de communication de la figure 1, le premier terminal sans fil 2 et le deuxième terminal sans fil 3 ont un fonctionnement indépendant. Autrement dit, en cas d'absence ou d'effacement du premier terminal sans fil 2, le fonctionnement du deuxième terminal sans fil 3 n'est pas affecté, et en cas d'absence ou d'effacement du deuxième terminal sans fil 3, le fonctionnement du terminal sans fil 2 n'est pas affecté.

Mais il existe également des systèmes, dit « complexes », qui comportent un groupe cohérent de terminaux appairés à un point d'accès réseau. On entend par « groupe cohérent » le fait que tous les terminaux du groupe cohérent doivent être appairés au point d'accès réseau pour que le système complexe soit fonctionnel. La figure 1b montre par exemple un système de communication complexe comportant :
- le point d'accès réseau 1 raccordé au réseau 5 qui est par exemple un réseau de téléphonie vocale,
- un terminal « cadran » 10, qui comprend un clavier, un écran, un haut-parleur, un microphone et un dispositif de charge, le terminal « cadran » 10 étant apte à communiquer avec le point d'accès réseau 1 au moyen de la liaison radiofréquence 4, et
- un terminal « combiné » 11, qui comprend un écouteur, un microphone et un unique bouton, le terminal « combiné » 11 étant apte à
- communiquer avec le point d'accès réseau 1 au moyen de la liaison radiofréquence 4.

Les terminaux « cadran » 10 et « combiné » 11 doivent être appairés sur le point d'accès réseau 1. L'appairage des deux terminaux sur le point d'accès réseau 1 nécessite des manipulations à effectuer sur le point d'accès réseau 1, sur le terminal «cadran» 10 et sur le terminal «combiné» 11. Ces manipulations imposent typiquement l'utilisation de menus et sous-menus peu intuitifs et s'avèrent complexes pour un utilisateur non averti. La commercialisation d'un tel système complexe sans son point d'accès réseau n'est en outre pas envisageable du fait de la complexité de mise en oeuvre de l'appairage de chacun des terminaux dans un ordre précis.

Il est connu, pour appairer un groupe de terminaux avec un point d'accès réseau selon le protocole DECT, un procédé selon lequel :
- les identités de tous les membres du groupe de terminaux sont transmises au point d'accès réseau lors de l'appairage du premier membre, et
- l'appairage de chacun des autres membres sur le point d'accès réseau n'est ensuite autorisé que dans une fenêtre temporelle définie.

Un tel procédé est toutefois complexe à mettre en oeuvre et implique en outre une évolution majeure du protocole DECT.

Par ailleurs, les documents WO 2013/180860 A1 intitulé « Smart pairing using Bluetooth® technology » et WO 2015/091327 A1 intitulé «Système de radiocommunication, comportant des moyens d'association d'un terminal de radiocommunication avec une station de radiocommunication, station et terminal de communication d'un tel système et procédé d'association » sont connus de l'art antérieur.

### RESUME DE L'INVENTION

L'invention offre une solution aux problèmes évoqués précédemment, en permettant un appairage automatique d'une pluralité de terminaux sans fil d'un système complexe à un point d'accès réseau.

L'invention est définie par les revendications indépendantes 1, 8 et 9. Des modes de réalisation détaillés sont définis par les revendications dépendantes.

Un aspect de l'invention concerne ainsi un procédé d'appairage automatique d'une pluralité de terminaux sans fil d'un système complexe à un point d'accès réseau, ladite pluralité comportant un terminal maître et au moins un terminal esclave, chaque terminal esclave connaissant un premier identifiant natif du terminal maître et le terminal maître connaissant un identifiant natif de chaque terminal esclave, le système complexe étant fonctionnel lorsque chaque terminal de ladite pluralité est appairé au point d'accès réseau, le procédé comportant :
- une première étape selon laquelle le terminal maître, identifié par un deuxième identifiant natif, s'appaire au point d'accès réseau et le terminal maître enregistre un identifiant du point d'accès réseau ;
- pour chaque terminal esclave, une deuxième étape selon laquelle :
   ∘ dans une première sous-étape, le terminal maître remplace son identifiant actuel par l'identifiant dudit terminal esclave ;
   ∘ dans une deuxième sous-étape, le terminal maître, identifié par l'identifiant dudit terminal esclave, requiert un appairage avec le point d'accès réseau ;
   ∘ dans une troisième sous-étape, le point d'accès réseau vérifie un droit d'appairage du terminal esclave, valide la requête d'appairage et enregistre l'identifiant du terminal esclave ;
- une troisième étape selon laquelle le terminal maître transmet à chaque terminal esclave l'identifiant du point d'accès réseau.

Les différentes étapes et sous-étapes sont numérotées dans un souci de clarté et afin de pouvoir facilement les citer. Cette numérotation ne préjuge toutefois pas a priori de l'ordre dans lequel les étapes sont réalisées.

Grâce à l'invention, le terminal maître s'appaire au point d'accès réseau et est ensuite avantageusement capable d'appairer chaque terminal esclave du système de communication complexe au point d'accès réseau. Aucune manipulation complexe de la part d'un utilisateur n'est requise.

Outre les caractéristiques qui viennent d'être évoquées dans le paragraphe précédent, le procédé d'appairage automatique selon un aspect de l'invention peut présenter une ou plusieurs caractéristiques complémentaires parmi les suivantes, considérées individuellement ou selon toutes les combinaisons techniquement possibles :
- Le terminal maître est configuré dans un premier mode de fonctionnement dit « mode terminal » lors des première et deuxième étapes et le terminal maître est configuré dans un deuxième mode de fonctionnement dit « mode point d'accès réseau » lors de la troisième étape.
- Préalablement à la deuxième sous-étape de la deuxième étape, le terminal maître envoie une requête au point d'accès réseau afin que le point d'accès réseau active un mode d'appairage dans lequel le point d'accès réseau est ouvert aux requêtes d'appairage et informe son environnement qu'il est ouvert aux requêtes d'appairage.
- Alternativement, préalablement à la deuxième sous-étape de la deuxième étape, le terminal maître envoie une requête au point d'accès réseau afin que le point d'accès réseau active un mode d'appairage dans lequel le point d'accès réseau est ouvert aux requêtes d'appairage mais n'informe pas son environnement qu'il est ouvert aux requêtes d'appairage.
- Alternativement, préalablement à la deuxième sous-étape de la deuxième étape, le terminal maître envoie une requête au point d'accès réseau afin que le point d'accès réseau active un mode d'appairage dans lequel le point d'accès réseau accepte des requêtes d'appairage particulières et informe son environnement qu'il accepte lesdites requêtes d'appairage particulières.
- Lorsque le point d'accès réseau active son mode d'appairage, le point d'accès réseau accepte les requêtes d'appairage pendant une fenêtre temporelle inférieure à 10 secondes.
- Le point d'accès réseau, lorsqu'il active son mode d'appairage, informe son environnement qu'il accepte des requêtes d'appairage dans un signal qui comporte également l'identifiant du point d'accès réseau que le terminal maître a enregistré lors de la première étape ; et le terminal maître requiert un appairage avec un équipement dès que le terminal maître reçoit un signal comportant :
   ∘ une information selon laquelle ledit équipement accepte des requêtes d'appairage, et
   ∘ un identifiant correspondant à un identifiant préalablement enregistré par le terminal maître.

Un autre aspect de l'invention concerne un système complexe comportant un point d'accès réseau et une pluralité de terminaux sans fil, ladite pluralité comprenant un terminal maître et au moins un terminal esclave, chaque terminal esclave connaissant un premier identifiant natif du terminal maître et le terminal maître connaissant un identifiant natif de chaque terminal esclave, le système complexe étant fonctionnel lorsque chaque terminal de ladite pluralité est appairé au point d'accès réseau, le système complexe comportant :
- des moyens d'appairage du terminal maître au point d'accès réseau, le terminal maître étant identifié par un deuxième identifiant natif ;
- des moyens d'enregistrement, par le terminal maître, d'un identifiant du point d'accès réseau ;
- des moyens d'émission, par le terminal maître, d'une requête de relance d'appairage à destination du point d'accès réseau ;
- des moyens de réception, par le point d'accès réseau, de ladite requête de relance d'appairage émise par le terminal maître ;
- des moyens de désactivation d'un mode de fonctionnement normal du point d'accès réseau et de positionnement du point d'accès réseau dans un mode d'appairage ;
- des moyens de remplacement, par le terminal maître, de son identifiant actuel par un identifiant d'un terminal esclave ;
- des moyens d'émission, par le terminal maître, d'une requête d'appairage avec le point d'accès réseau, le terminal maître étant identifié par l'identifiant du terminal esclave ;
- des moyens de réception, par le point d'accès réseau, de ladite requête d'appairage ;
- des moyens de vérification, par le point d'accès réseau, d'un droit d'appairage du terminal esclave ;
- des moyens de validation, par le point d'accès réseau, de ladite requête d'appairage ;
- des moyens d'enregistrement, par le point d'accès réseau, de l'identifiant du terminal esclave ;
- des moyens de désactivation du mode d'appairage du point d'accès réseau et de positionnement du point d'accès réseau dans son mode de fonctionnement normal ;
- des moyens de transmission, par le terminal maître, de l'identifiant du point d'accès réseau à chaque terminal esclave.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1a montre une représentation schématique d'un système de communication comportant plusieurs terminaux sans fil, chaque terminal sans fil ayant un fonctionnement autonome.
- La figure 1b montre une représentation schématique d'un système de communication complexe comportant plusieurs terminaux sans fil, chaque terminal sans fil devant être appairé à un point d'accès réseau pour que le système de communication complexe soit fonctionnel.
- La figure 2a montre une représentation schématique d'un terminal maître d'un système de communication complexe selon un aspect de l'invention.
- La figure 2b montre une représentation schématique d'un terminal esclave d'un système de communication complexe selon un aspect de l'invention.
- La figure 2c montre une représentation schématique d'un point d'accès réseau d'un système de communication complexe selon un aspect de l'invention.
- La figure 3a montre une représentation schématique d'une partie d'un système de communication complexe, préalablement à un procédé d'appairage automatique selon un aspect de l'invention.
- La figure 3b montre une représentation schématique d'un système de communication complexe complet, à l'issue d'un procédé d'appairage automatique selon un aspect de l'invention.
- La figure 4a montre une première séquence d'étapes d'un procédé d'appairage automatique selon un aspect de l'invention.
- La figure 4b montre une deuxième séquence d'étapes d'un procédé d'appairage automatique selon un aspect de l'invention.
- La figure 5 montre une représentation schématique d'une variante d'un terminal maître d'un système de communication selon un aspect de l'invention.
- La figure 6a montre une séquence d'étapes d'une première variante du procédé d'appairage automatique selon un aspect de l'invention.
- La figure 6b montre une séquence d'étapes d'une deuxième variante du procédé d'appairage automatique selon un aspect de l'invention.
- La figure 7a montre une représentation schématique d'une mémoire de paramètres d'un point d'accès réseau d'un système de communication complexe selon un aspect de l'invention.
- La figure 7b montre une représentation schématique d'une mémoire de paramètres d'un terminal maître d'un système de communication complexe selon un aspect de l'invention.
- La figure 7c montre une représentation schématique d'une mémoire de paramètres d'un terminal esclave d'un système de communication complexe selon un aspect de l'invention.

### DESCRIPTION DETAILLEE D'AU MOINS UN MODE DE REALISATION DE L'INVENTION

Sauf précision contraire, un même élément apparaissant sur des figures différentes présente une référence unique.

Dans le présent document, on entend par « appairage d'un premier terminal avec un deuxième terminal » le fait que :
- le premier terminal ou le deuxième terminal calcule une clé d'appairage ;
- le premier terminal et le deuxième terminal enregistrent la clé d'appairage ;
- le premier terminal enregistre un identifiant du deuxième terminal et le deuxième terminal enregistre un identifiant du premier terminal.

A l'issue de l'appairage du premier terminal avec le deuxième terminal, les premier et deuxième terminaux se « connaissent » mutuellement et sont en mesure de se synchroniser.

On entend par « synchronisation d'un premier terminal avec un deuxième terminal » le fait que le premier terminal et le deuxième terminal, qui ont préalablement été appairés l'un avec l'autre, se recherchent, se trouvent et s'accordent afin de pouvoir ensuite communiquer entre eux.

Dans le présent document, les termes « enregistrer » et « inscrire en mémoire » sont indifféremment employés.

La présente description comporte différentes étapes et sous-étapes, qui sont numérotées dans un souci de clarté et afin de pouvoir facilement les citer. Cette numérotation ne préjuge toutefois pas a priori de l'ordre dans lequel ces différentes étapes et sous-étapes sont réalisées.

La figure 1a a été précédemment décrite, qui montre une représentation schématique d'un système de communication comportant plusieurs terminaux sans fil, chaque terminal sans fil ayant un fonctionnement autonome.
La figure 1b a également été précédemment décrite, qui montre une représentation schématique d'un système de communication complexe, comportant le point d'accès réseau 1, le terminal « cadran » 10 et le terminal « combiné » 11. Le terminal « cadran » 10 et le terminal « combiné » 11 ont un fonctionnement interactif ; ils doivent tous les deux être appairés au point d'accès réseau 1 pour que le système de communication complexe de la figure 1b fonctionne.
Un système de communication complexe selon un aspect de l'invention comporte, d'une manière générale, un point d'accès réseau et une pluralité de terminaux sans fil. La pluralité de terminaux sans fil comprend un terminal maître et au moins un terminal esclave. Chaque terminal sans fil de ladite pluralité doit être appairé au point d'accès réseau pour que le système de communication complexe soit fonctionnel. Un terminal maître est généralement doté de moyens d'interface homme-machine comportant typiquement un écran d'affichage. Un terminal esclave est généralement dépourvu de moyens d'interface homme-machine, ou pourvu uniquement de moyens limités d'interface homme-machine, tels qu'un unique bouton et/ou un microphone et/ou un écouteur.

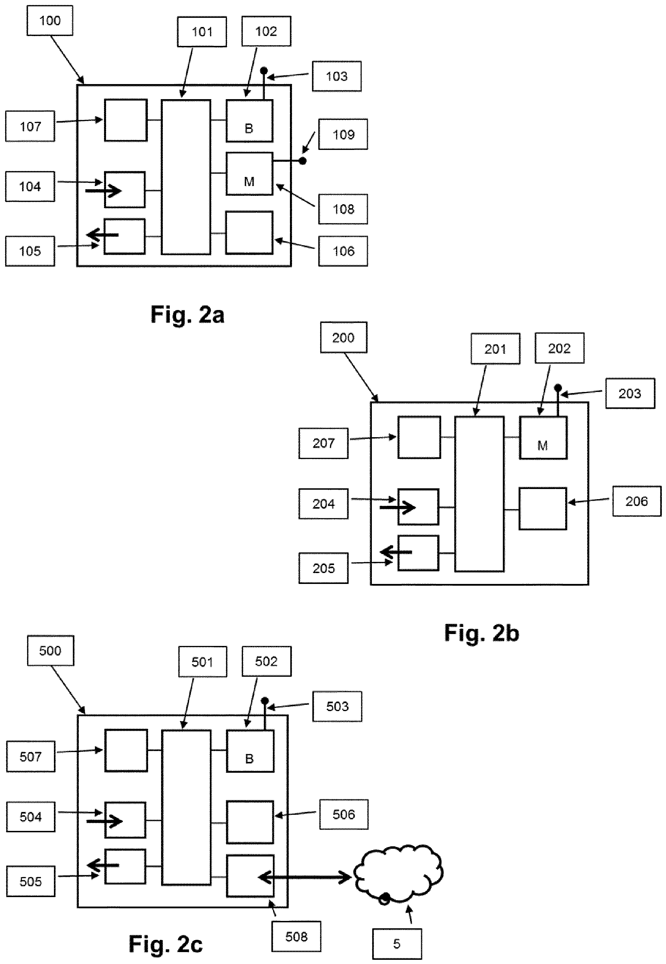

La figure 2a montre une représentation schématique d'un terminal maître 100 d'un système de communication complexe selon un aspect de l'invention. Le terminal maître 100 comporte un processeur 101 qui commande une première interface radio 102 et une deuxième interface radio 108. La première interface radio 102 est raccordée à au moins une première antenne 103, et la deuxième interface radio 108 est raccordée à au moins une deuxième antenne 109. La première interface radio 102 assure une fonction de point d'accès réseau, tandis que la deuxième interface radio 108 assure une fonction de terminal sans fil. Le processeur 101 est interfacé avec une mémoire non volatile 107 comportant un code d'instruction exécuté par le processeur 101. Le processeur 101 est également interfacé avec une mémoire 106 comportant des paramètres propres au fonctionnement du terminal maître 100. Il est prévu sur le terminal maître 100 au moins un moyen 104 de détection d'une action de commande d'un utilisateur, par exemple un bouton, un clavier ou un microphone. Il peut également être prévu au moins un moyen 105 d'information d'un utilisateur à propos d'un état de fonctionnement du terminal maître 100, par exemple un afficheur, un voyant ou un haut-parleur.

La figure 2b montre une représentation schématique d'un terminal esclave 200 d'un système de communication complexe selon un aspect de l'invention. Le terminal esclave 200 comporte un processeur 201 qui commande un une interface radio 202 assurant une fonction de terminal sans fil. L'interface radio 202 est raccordée à au moins une antenne 203. Le processeur 201 est interfacé avec une mémoire non volatile 207 comportant un code d'instruction exécuté par le processeur 201. Le processeur 201 est également interfacé avec une mémoire 206 comportant des paramètres propres au fonctionnement du terminal esclave 200. Il peut être prévu sur le terminal esclave 200 au moins un moyen 204 de perception par le terminal esclave 200 de son environnement, par exemple un microphone, une caméra, un bouton ou tout autre capteur. Il peut également être prévu sur le terminal esclave 200 au moins un moyen 205 d'action par le terminal esclave 200 sur son environnement, par exemple un afficheur, un voyant ou un haut-parleur.

La figure 2c montre une représentation schématique d'un point d'accès réseau 500 d'un système de communication complexe selon un aspect de l'invention. Le point d'accès réseau 500 comporte un processeur 501 qui commande une interface radio 502 assurant une fonction de point d'accès réseau. L'interface radio 502 est raccordée à au moins une antenne 503. Le processeur 501 est interfacé avec une mémoire non volatile 507 comportant un code d'instruction exécuté par le processeur 501. Le processeur 501 est également interfacé avec une mémoire 506 comportant des paramètres propres au fonctionnement du point d'accès réseau 500. Il est prévu sur le point d'accès réseau 500 au moins un moyen 504 de détection d'une action de commande d'un utilisateur, par exemple un bouton, un clavier ou un microphone. Il peut également être prévu sur le point d'accès réseau 500 au moins un moyen 505 d'information d'un utilisateur à propos d'un état de fonctionnement du point d'accès réseau 500, par exemple un afficheur, un voyant ou un haut-parleur. Enfin, il est prévu sur le point d'accès réseau 500 un sous-ensemble 508 d'interfaçage du processeur 501 avec un réseau de télécommunication 5. Le réseau de télécommunication 5 est par exemple le réseau Internet ou le réseau téléphonique commuté.

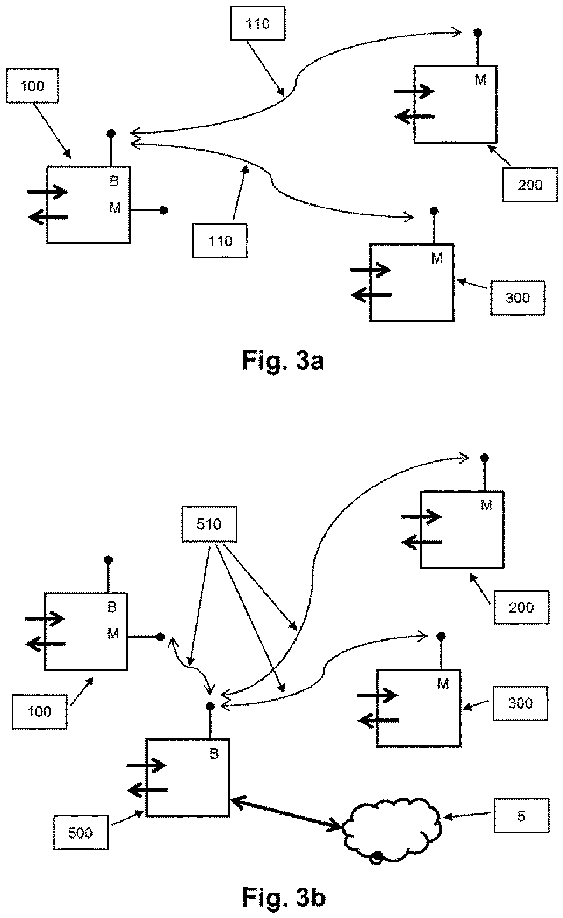

La figure 3a montre une représentation schématique d'une partie d'un système de communication complexe, préalablement à un procédé d'appairage automatique selon un aspect de l'invention. La partie du système de communication complexe représentée en figure 3a est un groupe terminal comportant :
- le terminal maître 100 tel que précédemment décrit en lien avec la figure 2a ;
- le terminal esclave 200, dit « premier terminal esclave 200 » tel que précédemment décrit en lien avec la figure 2b ;
- un deuxième terminal esclave 300, le deuxième terminal esclave 300 étant identique au premier terminal esclave 200.

Le groupe terminal peut alternativement ne comporter qu'un unique terminal esclave, ou trois terminaux esclaves ou plus. D'une manière générale, un groupe terminal comporte un unique terminal maître et au moins un terminal esclave. L'ensemble des communications au sein du groupe terminal s'effectue au moyen de liens radio 110. Les liens radio 110 sont par exemple conformes à la norme DECT. Alternativement, les liens radio 110 pourraient être conformes à une autre norme de communication sans fil radio, et notamment à une norme Wi-Fi.

Lors de la fabrication du groupe terminal, le premier terminal esclave 200 est appairé avec le terminal maître 100, et le deuxième terminal esclave 300 est appairé avec le terminal maître 100. Pour ce faire, le terminal maître 100 est configuré dans un mode de fonctionnement dit « mode point d'accès réseau », au moyen de sa première interface radio 102 et de sa première antenne 103. Dans son mode point d'accès réseau, le terminal maître 100 a le rôle d'un point d'accès réseau. Chaque terminal esclave peut ainsi être appairé avec le terminal maître 100 au moyen de procédures habituellement utilisées lors de la fabrication de systèmes de communication tels que représentés à la figure 1a, en remplaçant le point d'accès réseau 1 par le terminal maître 100 fonctionnant en mode point d'accès réseau.

On entend par « identifiant natif d'un terminal » un identifiant attribué à un terminal lors de sa fabrication. Chaque terminal esclave a typiquement un unique identifiant natif. L'unique identifiant natif de chaque terminal esclave est par exemple un identifiant IPUI (de l'anglais « International Portable User Identity ») selon la norme DECT. Le terminal maître 100 a typiquement un premier identifiant natif et un deuxième identifiant natif.
- Le premier identifiant natif du terminal maître 100 est associé à la fonction de point d'accès réseau du terminal maître 100. Le premier identifiant natif du terminal maître 100 est par exemple un identifiant RFPI (de l'anglais « Radio Fixed Part Identity ») selon la norme DECT.
- Le deuxième identifiant natif du terminal maître 100 est associé à la fonction de terminal du terminal maître 100. Le deuxième identifiant natif du terminal maître 100 est par exemple un identifiant IPUI selon la norme DECT.

Le terminal maître 100 peut alternativement avoir un unique identifiant natif, par exemple une adresse MAC selon un protocole Wi-Fi. Dans un souci de clarté, la suite de la présente description est toutefois réalisée en distinguant des premier et deuxième identifiants natifs du terminal maître 100, afin de mieux différencier les deux modes de fonctionnement du terminal maître 100.

A l'issue de l'appairage de chaque terminal esclave avec le terminal maître, le terminal maître 100 connaît notamment l'identifiant natif de chaque terminal esclave, et chaque terminal esclave connaît notamment le premier identifiant natif du terminal maître.

A l'issue de l'appairage de chaque terminal esclave avec le terminal maître :
- le terminal maître 100 a enregistré dans sa mémoire de paramètres de 106 l'identifiant natif de chaque terminal esclave, et
- chaque terminal esclave a enregistré dans sa mémoire de paramètres le premier identifiant natif du terminal maître 100.

A l'issue de l'appairage de chaque terminal esclave avec le terminal maître, le groupe terminal se trouve dans un état dit « état initial ».

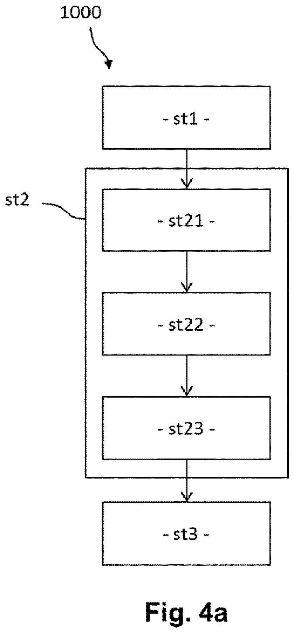

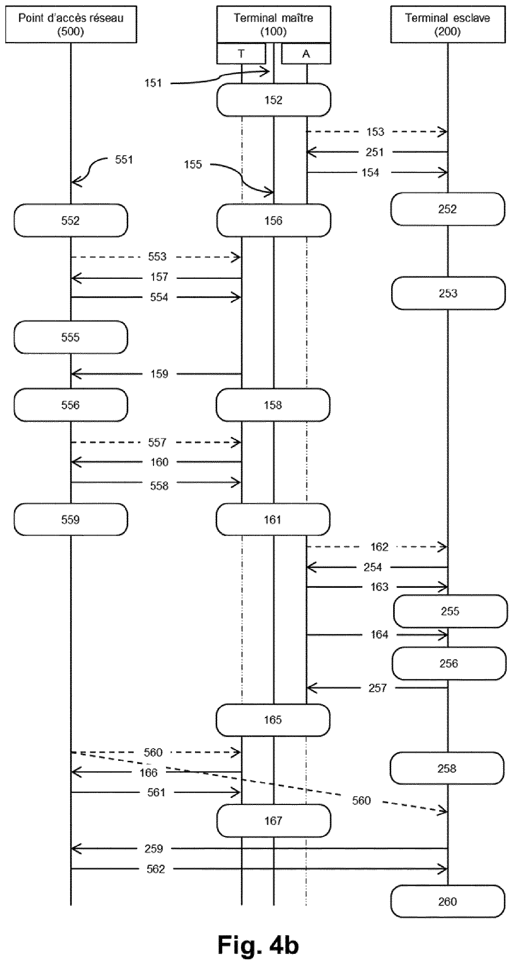

L'état initial du groupe terminal perdure jusqu'à ce qu'un utilisateur initie un procédé d'appairage automatique du groupe terminal sur le point d'accès réseau 500, selon un aspect de l'invention. Un mode de réalisation du procédé d'appairage automatique selon un aspect de l'invention est ultérieurement décrit en lien avec les figures 4a et 4b.

La figure 3b montre une représentation schématique d'un système de communication complexe complet, à l'issue d'un procédé d'appairage automatique selon un aspect de l'invention. A l'issue du procédé d'appairage automatique selon un aspect de l'invention, le système de communication complexe se trouve dans un état final. Dans l'état final, le terminal maître 100 et les premier et deuxième terminaux esclaves 200 et 300 du groupe terminal sont appairés au point d'accès réseau 500, et peuvent donc établir des communications avec le réseau de télécommunication 5 via le point d'accès réseau 500. L'ensemble des communications au sein du système de communication complexe s'effectue au moyen de liens radio 510. Les liens radio 110 sont par exemple conformes à la norme DECT. Alternativement, les liens radio 510 pourraient être conformes à une autre norme de communication sans fil radio, et notamment à une norme Wi-Fi.

La figure 4a, qui montre une première séquence d'étapes d'un mode de réalisation d'un procédé d'appairage automatique selon un aspect de l'invention, est à présent décrite. La première séquence d'étapes de la figure 4a montre de manière générique comment passer de l'état initial de la figure 3a à l'état final de la figure 3b. Le procédé d'appairage automatique selon un aspect de l'invention est référencé 1000 sur la figure 4a.

La figure 4a montre :
- une première étape st1 selon laquelle le terminal maître 100, identifié par son deuxième identifiant natif, s'appaire au point d'accès réseau 500 et le terminal maître 100 enregistre un identifiant du point d'accès réseau 500 ;
- pour chaque terminal esclave, une deuxième étape st2 selon laquelle :
   ∘ dans une première sous-étape st21, le terminal maître 100 remplace son identifiant actuel par l'identifiant natif dudit terminal esclave ;
   ∘ dans une deuxième sous-étape st22, le terminal maître 100, identifié par l'identifiant natif dudit terminal esclave, requiert un appairage avec le point d'accès réseau 500 ;
   ∘ dans une troisième sous-étape st23, le point d'accès réseau 500 vérifie un droit d'appairage du terminal esclave, valide la requête d'appairage et enregistre l'identifiant natif du terminal ;
- une troisième étape st3 selon laquelle le terminal maître 100 transmet à chaque terminal esclave l'identifiant du point d'accès réseau 500.

Dans une implémentation possible, selon la norme DECT, du procédé d'appairage automatique 1000, le procédé d'appairage automatique 1000 comporte avantageusement les caractéristiques complémentaires suivantes :
- lors de la troisième sous-étape st23, le point d'accès réseau 500 vérifie le droit d'appairage du terminal esclave par exemple au moyen d'un code PIN ;
- lors de la troisième sous-étape st23, le point d'accès réseau 500 enregistre également un paramètre d'appairage du terminal esclave avec le point d'accès réseau 500, le paramètre d'appairage étant par exemple une clé UAK ;
- à l'issue de la troisième sous-étape st23 et avant la troisième étape st3, le terminal maître 100 enregistre le paramètre d'appairage du terminal esclave avec le point d'accès réseau 500 ;
- lors de la troisième étape st3, le terminal maître 100 transmet également à chaque terminal esclave le paramètre d'appairage dudit terminal esclave avec le point d'accès réseau 500.
- Dans une autre implémentation possible, selon la norme Wi-Fi, du procédé d'appairage automatique 1000, le procédé d'appairage automatique 1000 comporte avantageusement la caractéristique complémentaire suivante :lors de la troisième sous-étape st23, le point d'accès réseau 500 vérifie le droit d'appairage du terminal esclave par exemple au moyen d'une clé WEP.

La figure 4b, qui montre une deuxième séquence d'étapes d'un mode de réalisation d'un procédé d'appairage automatique selon un aspect de l'invention, est à présent décrite La deuxième séquence d'étapes de la figure 4b montre une manière détaillée de passer de l'état initial de la figure 3a à l'état final de la figure 3b. Dans un souci de clarté, le deuxième terminal esclave 300 n'est pas représenté sur la figure 4b. Les étapes relatives à l'appairage du deuxième terminal esclave 300 avec le point d'accès réseau 500 sont toutefois décrites. La description ci-après est réalisée dans le cas particulier d'un système de communication utilisant la norme DECT. La description ci-après peut être adaptée à toute autre norme de communication sans fil radio.

L'état initial du groupe terminal, précédemment décrit, est référencé 152 à la figure 4b. Lors de la première mise sous tension 151 du terminal maître 100, ou tant que le terminal maître 100 n'a pas été appairé volontairement à un point d'accès réseau 500, le groupe terminal se positionne dans l'état initial 152. Pour mémoire, dans l'état initial 152, le terminal maître 100 active sa fonction de point d'accès réseau, référencée « A » sur la figure 4b, et désactive sa fonction de terminal, référencée « T » sur la figure 4b. Les premier et deuxième terminaux esclaves 200 et 300 ont été appairés au terminal maître 100 configuré en point d'accès réseau. Le terminal maître 100 connaît l'identifiant natif du premier terminal esclave 200 et l'identifiant natif du troisième terminal esclave 300. Les premier et deuxième terminaux esclaves 200 et 300 connaissent le premier identifiant natif du terminal maître 100.

Le terminal maître 100 configuré en point d'accès réseau émet alors typiquement, au moyen de sa première interface radio 102 et de sa première antenne 103, un signal périodique de balise 153 à destination de son environnement. Le signal périodique de balise 153 comporte le premier identifiant natif du terminal maître 100.

Le premier terminal esclave 200 capte le signal périodique de balise 153 émis par le terminal maître 100. L'identifiant compris dans le signal périodique de balise 153 étant identique au premier identifiant du terminal maître 100 stocké dans sa mémoire de paramètres 206, le premier terminal esclave 200 émet à destination du terminal maître 100 configuré en point d'accès réseau une requête de synchronisation 251, par exemple de type « LOCATE-REQUEST » selon la norme DECT. En réponse à la requête de synchronisation 251, le terminal maître 100 configuré en point d'accès réseau émet à destination du premier terminal esclave 200 une réponse 154, par exemple de type « LOCATE-ACCEPT » selon la norme DECT. Le premier terminal esclave 200 se trouve alors dans un état 252 synchronisé avec le terminal maître 100 configuré en point d'accès réseau.

Les étapes décrites dans le paragraphe précédent se répètent pour chaque terminal esclave du groupe terminal, de manière que chaque terminal esclave soit synchronisé avec le terminal maître 100.

Les étapes de synchronisation de chaque terminal esclave avec le terminal maître 100, qui viennent d'être décrites, sont indépendantes du procédé 1000 d'appairage automatique selon un aspect de l'invention, en lui-même. Autrement dit, il n'est pas nécessaire que les étapes de synchronisation de chaque terminal esclave avec le terminal maître 100 aient été réalisées pour que le procédé d'appairage automatique selon un aspect de l'invention puisse être exécuté. Le cas échéant, les étapes qui viennent d'être décrites ont typiquement lieu préalablement à la première étape st1 du procédé 1000 d'appairage automatique selon un aspect de l'invention.

Lorsqu'un utilisateur souhaite initier le procédé 1000 d'appairage automatique du groupe terminal au point d'accès réseau 500 selon un aspect de l'invention, l'utilisateur réalise une action 551 sur le point d'accès réseau 500, et l'utilisateur réalise une action 155 sur le terminal maître 100. L'action 551 de l'utilisateur sur le point d'accès réseau 500 est détectée par le point d'accès réseau 500 grâce à son moyen 504 de détection d'une action de commande d'un utilisateur. L'action 155 de l'utilisateur sur le terminal maître 100 est détectée par le terminal maître 100 grâce à son moyen 104 de détection d'une action de commande d'un utilisateur. L'action 551 de l'utilisateur sur le point d'accès réseau et l'action 155 de l'utilisateur sur le terminal maître 100 sont par exemple le fait pour l'utilisateur d'appuyer sur un bouton ou sur une touche d'un clavier, ou de prononcer une commande vocale.

Suite à l'action 551 de l'utilisateur sur le point d'accès réseau 500, la première étape st1 a lieu, selon laquelle le terminal maître 100 identifié par son deuxième identifiant natif s'appaire au point d'accès réseau 500 et le terminal maître 100 enregistre un identifiant du point d'accès réseau. La première étape st1 comporte par exemple les étapes suivantes :
- le point d'accès réseau 500 se positionne dans un mode 552 dit « mode d'appairage ». Dans le mode 552 d'appairage, le point d'accès réseau 500 émet à destination de son environnement un signal périodique de balise 553 comprenant un signal particulier indiquant que le point d'accès réseau 500 accepte les requêtes d'appairage.
- Le terminal maître 100 se positionne quant à lui dans un état 156 dans lequel :
   ∘ il active sa fonction de terminal au moyen de sa deuxième interface radio 108 et de sa deuxième antenne 109, puis il écoute son environnement à la recherche d'un signal périodique de balise comprenant un signal particulier indiquant que le point d'accès réseau 500 accepte les requêtes d'appairage, tel que le signal périodique de balise 553 précédemment décrit, et
   ∘ il désactive sa fonction de point d'accès réseau disponible au moyen de sa première interface radio 102 et de sa première antenne 103. On note que le terminal maître 100 peut également désactiver sa fonction de point d'accès réseau avant d'activer sa fonction de terminal.
- La fonction de point d'accès réseau du terminal maître 100 étant désactivée, le terminal maître 100 cesse d'émettre le signal périodique de balise 153. Chaque terminal esclave cesse de capter le signal périodique de balise 153 et se trouve alors dans un état désynchronisé 253.
- Lorsque le terminal maître 100 capte le signal périodique de balise 553 comprenant le signal particulier indiquant que le point d'accès réseau 500 accepte les requêtes d'appairage, le terminal maître 100 émet à destination du point d'accès réseau 500 une requête d'appairage 157, par exemple de type « ACCESS-RIGHT-REQUEST » selon la norme DECT. La requête d'appairage 157 comporte le deuxième identifiant natif du terminal maître 100. A réception de la requête d'appairage 157, le point d'accès réseau 500 met en oeuvre une procédure de vérification d'un droit d'appairage du terminal maître 100 identifié par son deuxième identifiant natif.

Si le résultat de la précédente procédure de vérification est positif, c'est-à-dire si terminal maître identifié par son deuxième identifiant natif à le droit de s'appairer avec le point d'accès réseau, alors :
- le point d'accès réseau 500 émet à destination du terminal maître 100 un message 554, par exemple de type « ACCESS-RIGHT-ACCEPT » selon la norme DECT, indiquant que le point d'accès réseau 500 valide l'appairage du terminal maître 100 identifié avec son deuxième identifiant natif,
- le point d'accès réseau 500 enregistre dans sa mémoire de paramètres 506 le deuxième identifiant natif du terminal maître 100,
- le terminal maître 100 enregistre quant à lui dans sa mémoire de paramètres 106 un identifiant, par exemple RFPI selon la norme DECT, du point d'accès réseau 500. Le terminal maître 100 est alors appairé au point d'accès réseau 500.

Après avoir émis le message 554 validant l'appairage du terminal maître 100, le point d'accès réseau 500 désactive son mode d'appairage 552 et se positionne dans un mode de fonctionnement normal 555. Dans le mode de fonctionnement normal 555, le point d'accès réseau 500 émet à destination de son environnement un signal périodique de balise ordinaire (non représenté), comportant l'identifiant du point d'accès réseau 500.

Lorsque le terminal maître 100 reçoit le signal périodique de balise ordinaire, qui comporte un identifiant identique à un identifiant stockée dans sa mémoire de paramètre 106, le terminal maître 100 se synchronise avec le point d'accès réseau 500, établit une communication avec le point d'accès réseau 500 puis émet à destination du point d'accès réseau une requête 159 de relance d'appairage, par exemple de type « OPEN-REGISTRATION-MODE » non défini dans la norme DECT mais largement utilisé dans le domaine DECT. A réception de la requête 159, le point d'accès réseau 500 se positionne dans un mode 556 d'appairage. Le mode 556 d'appairage est sensiblement identique au mode 552 d'appairage précédemment décrit. Dans le mode 556 d'appairage, le point d'accès réseau 500 émet à destination de son environnement un signal périodique de balise 557 comprenant un signal particulier indiquant que le point d'accès réseau 500 accepte les requêtes d'appairage.

La deuxième étape st2 du procédé 1000 selon un aspect de l'invention est à présent décrite. Après avoir émis la requête 159 de relance d'appairage, le terminal maître 100 modifie son deuxième identifiant natif pour la remplacer par l'identifiant natif du premier terminal esclave 200 qui est enregistrée dans sa mémoire de paramètres 106, selon la première sous-étape st21 de la deuxième étape st2. Autrement dit, le terminal maître 100 « usurpe» l'identifiant natif du premier terminal esclave 200. Le terminal maître 100 se trouve toujours dans l'état 156 précédemment décrit, dans lequel le terminal maître 100 écoute son environnement à la recherche d'un signal périodique de balise comprenant un signal particulier indiquant que le point d'accès réseau 500 accepte les requêtes d'appairage, tel que le signal périodique de balise 557 précédemment décrit.

Lorsqu'il reçoit le signal périodique de balise 557, selon la deuxième sous-étape st22 de la deuxième étape st2, le terminal maître 100 émet à destination du point d'accès réseau 500 une requête d'appairage 160, par exemple de type « ACCESS-RIGHT-REQUEST » selon la norme DECT. Le terminal maître 100 ayant remplacé son deuxième identifiant natif par l'identifiant natif du premier terminal esclave 200, la requête d'appairage 160 comporte l'identifiant natif du premier terminal esclave 200. A réception de la requête d'appairage 160, le point d'accès réseau 500 dans un exemple d'implémentation selon la norme DECT émet à destination du terminal maître 100 un message 558, par exemple de type « ACCESS-RIGHT-ACCEPT », indiquant que le point d'accès réseau 500 valide l'appairage du terminal maître 100 identifié avec l'identifiant natif du premier terminal esclave 200.Le terminal maître 100 est alors appairé au point d'accès réseau 500 sous l'identifiant natif du premier terminal esclave 200.

Après avoir émis le message 558 validant l'appairage du terminal maître 100 identifié avec l'identifiant natif du premier terminal esclave 200, le point d'accès réseau 500 désactive son mode d'appairage 556 et se positionne dans un mode de fonctionnement normal 559. Dans le mode de fonctionnement normal 559, le point d'accès réseau 500 émet à destination de son environnement un signal périodique de balise 560 ordinaire, comportant l'identifiant, par exemple RFPI selon la norme DECT, du point d'accès réseau.

Les étapes 159 et suivantes sont réalisées pour chaque terminal esclave du groupe terminal. On se place dans l'hypothèse où le groupe terminal comprend le premier terminal esclave 200 et le deuxième terminal esclave 300. Après la troisième sous-étape st23 de la deuxième étape st2 réalisée pour le premier terminal esclave 200, le terminal maître 100 peut alternativement :
- reprendre son deuxième identifiant natif, puis, selon la première sous-étape st21 de la deuxième étape st2 réalisée pour le deuxième terminal esclave 300, remplacer son deuxième identifiant natif par l'identifiant natif du deuxième terminal esclave 300, ou
- remplacer directement l'identifiant du premier terminal esclave 200 par l'identifiant du deuxième terminal esclave 300, selon la première sous-étape st21 de la deuxième étape st2 réalisée pour le deuxième terminal esclave 300.

D'une manière générale, lors de la première sous-étape st21 de la deuxième étape st2 réalisée pour un terminal esclave donné, le terminal maître 100 remplace son identifiant actuel par l'identifiant dudit terminal esclave. L'identifiant actuel du terminal maître 100 peut donc selon les cas être le deuxième identifiant natif du terminal maître 100 ou l'identifiant natif d'un autre terminal esclave. Lorsque le terminal maître 100 s'est ainsi appairé avec le point d'accès réseau en usurpant successivement l'identifiant natif de chaque terminal esclave du groupe terminal, le terminal maître 100 transmet à chaque terminal esclave l'identifiant du point d'accès réseau 500, selon la troisième étape st3 du procédé 1000.

La troisième étape st3 peut par exemple comporter les étapes suivantes :
- le terminal maître 100 se positionne dans un état 161 dans lequel il réactive sa fonction de point d'accès réseau assurée par sa première interface radio 102 et sa première antenne 103. Suite à l'activation de sa fonction de point d'accès réseau, le terminal maître 100 émet à destination de son environnement un signal périodique de balise 162. Le signal périodique de balise 162 comporte le premier identifiant natif du terminal maître 100.
- Le terminal maître 100 dans l'état 161 peut éventuellement désactiver sa fonction de terminal, en désactivant sa deuxième interface radio 108 et sa deuxième antenne 109.
- Le premier terminal esclave 200 qui capte le signal périodique de balise 162 comportant un identifiant correspondant à au premier identifiant natif du terminal maître 100 enregistré dans sa mémoire de paramètre 206, émet à destination du terminal maître 100 configuré en point d'accès réseau une requête de synchronisation 254, par exemple de type « LOCATE-REQUEST » selon la norme DECT. A réception de la requête de synchronisation 254, le terminal maître 100 configuré en point d'accès réseau émet à destination du premier terminal esclave 200 une réponse 163, par exemple de type « LOCATE-ACCEPT » selon la norme DECT. Le premier terminal esclave 200 recevant la réponse 163 après avoir émis la requête de synchronisation 254 est alors dans un état 255 synchronisé avec le terminal maître 100 configuré en point d'accès réseau. Cette étape a typiquement lieu pour chaque terminal esclave du groupe terminal.
- Le terminal maître 100 transmet alors au premier terminal esclave 200 avec lequel il est synchronisé l'identifiant du point d'accès réseau 500, au moyen d'une requête spécifique 164. La requête spécifique 164 peut être cryptée ou non cryptée. Le terminal maître 100 peut par exemple utiliser un canal de transmission de données propriétaires, disponible dans le protocole DECT, pour transmettre la requête spécifique 164. Cette étape a typiquement lieu pour chaque terminal esclave du groupe terminal.

Le premier terminal esclave 200 recevant la requête spécifique 164 enregistre dans sa mémoire de paramètres 206 l'identifiant du point d'accès réseau 500. A ce stade, tout se passe comme si le premier terminal esclave 200 avait été préalablement appairé avec le point d'accès réseau 500. Le premier terminal esclave 200 se trouve dans un état 256 dans lequel il possède tous les éléments nécessaires à sa synchronisation avec le point d'accès réseau 500. Le premier terminal esclave 200 émet alors à destination du terminal maître 100 configuré en point d'accès réseau une réponse 257 indiquant que la transmission des informations contenues dans la requête spécifique 164 a réussi. La réponse 157 est typiquement transmise de la même manière que la requête spécifique 164. Les étapes décrites dans le présent paragraphe ont typiquement lieu pour chaque terminal esclave du groupe terminal.

Lorsque le terminal maître 100 a reçu une réponse 157 de la part de chaque terminal esclave du groupe terminal, le terminal maître 100 sait que chaque terminal esclave du groupe terminal dispose des éléments nécessaires à sa synchronisation avec le point d'accès réseau 500. Le terminal maître 100 se positionne alors dans un état 165 dans lequel :
- il désactive sa fonction de point d'accès réseau, en désactivant sa première interface radio 102 et sa première antenne 103, et
- il active sa fonction de terminal, en activant sa deuxième interface radio 108 et sa deuxième antenne 109.

Le terminal maître 100 ayant désactivé sa fonction de point d'accès réseau, le terminal maître 100 cesse d'émettre le signal périodique de balise 162. Chaque terminal esclave cesse donc de capter le signal périodique de balise 162. Ne captant plus le signal périodique de balise 162, chaque terminal esclave se positionne dans un état 258 de recherche d'un signal périodique de balise comportant l'identifiant d'un équipement correspondant à un identifiant enregistré dans la mémoire de paramètres dudit terminal esclave.

De la même manière, le terminal maître 100 configuré en terminal dans l'état 165 est à la recherche d'un signal périodique de balise comportant l'identifiant d'un équipement correspondant à un identifiant enregistré dans sa mémoire de paramètres 106.

A ce stade :
- chaque terminal esclave dispose dans sa mémoire de paramètres de l'identifiant du point d'accès réseau 500 et du premier identifiant du terminal maître 100 ;
- le terminal maître 100 dispose dans sa mémoire de paramètres 106 de l'identifiant du point d'accès réseau 500, et de l'identifiant de chaque terminal esclave.

Le terminal maître 100 a cessé d'émettre le signal périodique de balise 162, aucun terminal esclave n'émet un tel signal périodique de balise, mais le point d'accès réseau 500 est dans le mode de fonctionnement normal 559 dans lequel il émet le signal périodique de balise 560 comportant l'identifiant du point d'accès réseau 500, ainsi que précédemment décrit.

Le terminal maître 100 qui capte le signal périodique de balise 560, émet à destination du point d'accès réseau 500 une requête de synchronisation 166, par exemple de type « LOCATE-REQUEST » selon la norme DECT. A réception de la requête de synchronisation 166, le point d'accès réseau 500 émet à destination du terminal maître 100 une réponse 561 validant la requête de synchronisation 166, par exemple de type « LOCATE-ACCEPT » selon la norme DECT. A réception de la réponse 561, le terminal maître 100 est dans un état 167 synchronisé avec le point d'accès réseau 500.

De la même manière, le premier terminal esclave 200 qui capte le signal périodique de balise 560, émet à destination du point d'accès réseau 500 une requête de synchronisation 259, par exemple de type « LOCATE-REQUEST » selon la norme DECT. A réception de la requête de synchronisation 259, le point d'accès réseau 500 émet à destination du premier terminal esclave 200 une réponse 562 validant la requête de synchronisation 259, par exemple de type « LOCATE-ACCEPT » selon la norme DECT. A réception de la réponse 562, le premier terminal esclave 200 est dans un état 260 synchronisé avec le point d'accès réseau 500. Les étapes décrites dans le présent paragraphe ont typiquement lieu pour chaque terminal esclave du groupe terminal.

Chaque terminal du groupe terminal, c'est-à-dire le terminal maître 100 et chaque terminal esclave, étant synchronisé avec le point d'accès réseau, le système de communication complexe comportant le groupe terminal et le point d'accès réseau 500 se trouve dans l'état final de la figure 3b.

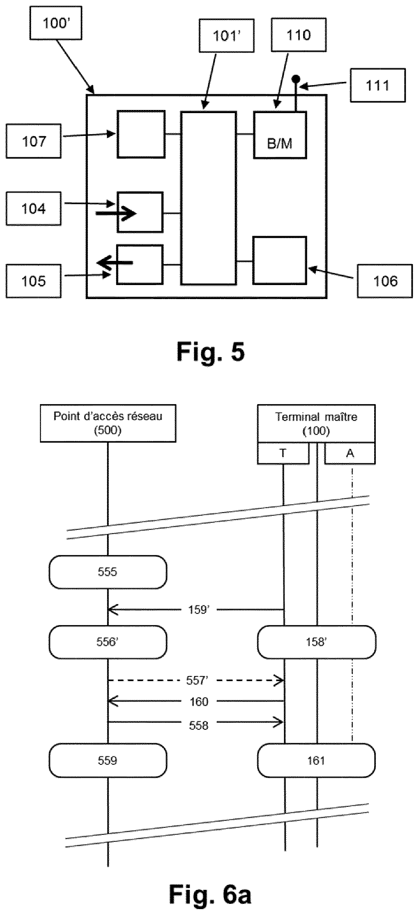

La figure 5 montre une représentation schématique d'un terminal maître 100' alternatif d'un système de communication complexe selon un aspect de l'invention. Le terminal maître 100' alternatif comporte un processeur 101' qui est interfacé avec la mémoire non volatile 107 et avec la mémoire de paramètres 106, ainsi que précédemment décrit en lien avec la figure 2a. Il est prévu sur le terminal maître 100' alternatif au moins le moyen 104 de détection d'une action de commande d'un utilisateur, tel que décrit en lien avec la figure 2a. Il peut également être prévu sur le terminal maître 100' alternatif au moins le moyen 105 d'information d'un utilisation à propos d'un état de fonctionnement du terminal maître 100, tel que décrit en lien avec la figure 2a. A la différence du terminal maître 100 décrit à la figure 2a, le terminal maître 100' alternatif comporte une unique interface radio 110 raccordée à au moins une antenne 111. L'interface radio 110 unique est apte à assurer la fonction de point d'accès réseau et la fonction de terminal. Le processeur 101' commande l'interface radio 110 et lui demande alternativement de se positionner dans son mode de fonctionnement « point d'accès réseau » ou dans son mode de fonctionnement « terminal ». Le terminal maître 100' alternatif fusionne ainsi avantageusement les première et deuxième interfaces radio 102 et 108 en l'unique interface radio 110.

Le terminal maître 100 ou le terminal maître alternatif 100' peuvent indifféremment être utilisés dans le procédé 1000 d'appairage automatique selon un aspect de l'invention, dans la mesure où le procédé 1000 d'appairage automatique selon un aspect de l'invention ne nécessite jamais que les deux fonctions « point d'accès réseau » et « terminal » du terminal maître soient simultanément actives.

La figure 6a, qui montre une séquence d'étapes d'une première variante du procédé 1000 d'appairage automatique selon un aspect de l'invention, est à présent décrite.

Il a été précédemment décrit en lien avec la figure 4b que préalablement à la deuxième sous-étape st22 de la deuxième étape st2, le terminal maître 100 envoie la requête 159 de relance d'appairage au point d'accès réseau 500 afin que le point d'accès réseau active le mode 556 d'appairage dans lequel le point d'accès réseau 500 est ouvert aux requêtes d'appairage et informe son environnement, via le signal périodique de balise 557, qu'il est ouvert aux requêtes d'appairage. N'importe quel terminal dans un mode de recherche d'appairage et captant ce signal périodique de balise 557 envoie automatiquement une requête d'appairage au point d'accès réseau 500, et le point d'accès réseau 500 accepte automatiquement cette requête d'appairage.

La figure 6a montre une première variante selon laquelle l'appairage d'un terminal avec le point d'accès réseau est avantageusement sécurisé. Selon cette première variante :
- le terminal maître 100 n'émet pas la requête 159, mais émet à destination du point d'accès réseau 500 une requête 159' de relance d'appairage comportant un élément définissant un mode d'appairage spécial, par exemple sous la forme d'un bit spécifique. Le terminal maître 100 modifie ensuite son identifiant actuel pour le remplacer par celui d'un terminal esclave, ainsi que précédemment décrit. Le terminal maître 100 ne se positionne en revanche pas à la recherche d'un signal particulier indiquant que le point d'accès réseau accepte les requêtes d'appairage.
- A réception de la requête 159', le point d'accès réseau 500 se positionne dans un état 556' d'appairage spécial, dans lequel le point d'accès réseau 500 est ouvert aux requêtes d'appairage, mais n'informe pas son environnement qu'il est ouvert aux requêtes d'appairage. Dans l'état 556' d'appairage spécial, le point d'accès réseau émet à destination de son environnement un signal périodique de balise 557' qui ne comporte pas l'information selon laquelle le point d'accès réseau 500 est ouvert aux requêtes d'appairage.
- Après avoir émis la requête 159', le terminal maître 100 attend durant un délai défini, correspondant au temps maximum nécessaire pour que le point d'accès réseau 500 se positionne dans l'état 556' après avoir reçu la requête 159'. Lorsque le délai défini est écoulé, le terminal maître 100 émet à destination du point d'accès réseau 500 la requête d'appairage 160 précédemment décrite.
- A réception de la requête d'appairage 160, le point d'accès réseau 500, émet à destination du terminal maître 100 le message 558 précédemment décrit et se positionne dans le mode de fonctionnement normal 559, tandis que le terminal maître 100 se positionne dans l'état 161.

La première variante décrite en lien avec la figure 6a est simple d'implémentation et permet avantageusement une sécurisation passive de l'appairage du terminal maître 100 avec le point d'accès réseau 500, en limitant la possibilité qu'un autre terminal transmette une requête d'appairage parasite.

Alternativement ou complémentairement à la première variante précédemment décrite en lien avec la figure 6a, le point d'accès réseau 500 peut, à réception de la requête 159', se placer dans l'état 556' d'appairage spécial uniquement pendant une fenêtre temporelle courte, par exemple de l'ordre d'une seconde ou de quelques secondes. La fenêtre temporelle ainsi définie est typiquement inférieure à dix secondes. On permet ainsi avantageusement au terminal maître 100, qui se trouve typiquement à portée radio du point d'accès réseau 500, de transmettre sa requête d'appairage 160 tout en limitant la possibilité qu'un autre terminal, typiquement plus éloigné, ait le temps de transmettre une requête d'appairage parasite.

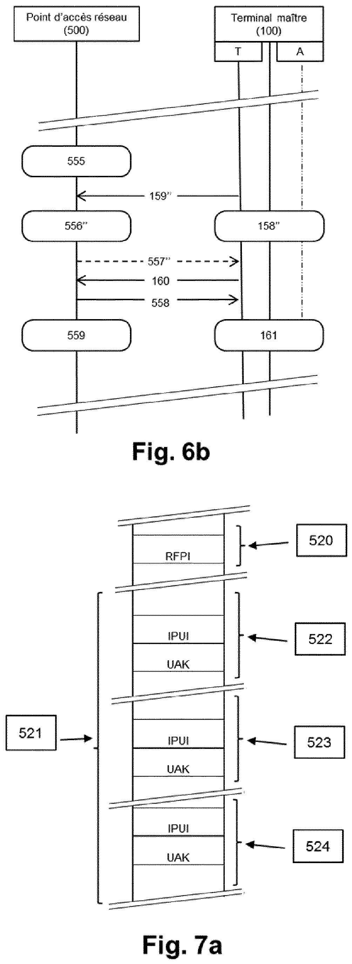

La figure 6b, qui montre une séquence d'étapes d'une deuxième variante du procédé d'appairage automatique selon un aspect de l'invention, est à présent décrite. La deuxième variante est une alternative de sécurisation à la variante qui vient d'être décrite. Selon la deuxième variante :
- le terminal maître 100 n'émet pas la requête 159, mais émet à destination du point d'accès réseau 500 une requête 159" de relance d'appairage comportant un élément définissant un mode d'appairage spécial, par exemple sous la forme d'un bit spécifique. Le terminal maître 100 modifie ensuite son identifiant actuel pour le remplacer par celle d'un terminal esclave, ainsi que précédemment décrit. Le terminal maître 100 se positionne ensuite dans un état 158" dans lequel il recherche un signal particulier indiquant que le point d'accès réseau accepte certaines requêtes d'appairage.
- A réception de la requête 159", le point d'accès réseau 500 se positionne dans un état 556" d'appairage spécial, dans lequel le point d'accès réseau 500 n'accepte que certaines requêtes d'appairage particulières. Dans l'état 556" d'appairage spécial, le point d'accès réseau émet à destination de son environnement un signal périodique de balise 557" qui comporte une information selon laquelle le point d'accès réseau 500 accepte des requêtes d'appairage uniquement de la part de terminaux particuliers spécialement conçus pour la mise en oeuvre du procédé 1000 d'appairage selon un aspect de l'invention.
- A réception du signal périodique de balise 557", le terminal maître 100 émet à destination du point d'accès réseau 500 la requête d'appairage 160 précédemment décrite.
- A réception de la requête d'appairage 160, le point d'accès réseau 500, émet à destination du terminal maître 100 le message 558 précédemment
décrit et se positionne dans le mode de fonctionnement normal 559, tandis que le terminal maître 100 se positionne dans l'état 161.

La variante décrite en lien avec la figure 6b permet avantageusement une sécurisation absolue de l'appairage du terminal maître 100 avec le point d'accès réseau 500, en empêchant activement que le point d'accès réseau 500 accepte une requête d'appairage de la part d'un terminal parasite.

Alternativement ou complémentairement à la deuxième variante précédemment décrite en lien avec la figure 6b, le point d'accès réseau 500 peut, à réception de la requête 159", se placer dans l'état 556" d'appairage spécial uniquement pendant une fenêtre temporelle courte, par exemple de l'ordre d'une seconde ou de quelques secondes. La fenêtre temporelle ainsi définie est typiquement inférieure à dix secondes. On permet ainsi avantageusement au terminal maître 100, qui se trouve typiquement à portée radio du point d'accès réseau 500, de transmettre sa requête d'appairage 160 tout en limitant la possibilité qu'un autre terminal, typiquement plus éloigné, ait le temps de transmettre une requête d'appairage parasite.

Alternativement ou complémentairement au mode de réalisation décrit en lien avec la figure 4b ou à la deuxième variante dudit mode de réalisation, une troisième variante peut être mise en oeuvre, qui est à présent décrite. Selon cette troisième variante :
- après avoir émis la requête 159 ou la requête 159" précédemment décrites, le terminal maître 100 remplace son identifiant actuel par celui d'un terminal esclave ainsi que précédemment décrit et se positionne ensuite dans l'état 158 ou dans l'état 158" précédemment décrits, dans lequel il recherche un signal périodique de balise 557 ou 557" tels que précédemment décrits, le signal périodique de balise 557 ou 557" comportant en outre selon la troisième variante l'identifiant du point d'accès réseau 500.
- A réception de la requête 159 ou de la requête 159", le point d'accès réseau 500 se positionne dans l'état 556 ou 556" d'appairage spécial, dans lequel le point d'accès réseau émet à destination de son environnement le signal périodique de balise 557 ou 557" comportant l'identifiant du point d'accès réseau 500.

- A réception du signal périodique de balise 557 ou 557", le terminal maître 100 émet à destination du point d'accès réseau 500 la requête d'appairage 160 précédemment décrite.
- A réception de la requête d'appairage 160, le point d'accès réseau 500, émet à destination du terminal maître 100 le message 558 précédemment décrit et se positionne dans le mode de fonctionnement normal 559, tandis que le terminal maître 100 se positionne dans l'état 161.

Selon la troisième variante, le terminal maître 100 ne requiert un appairage avec un équipement qu'à condition d'avoir reçu un signal comportant :
- une information selon laquelle ledit équipement accepte des requêtes d'appairage, et
- un identifiant correspondant à un identifiant préalablement enregistré par le terminal maître.

La troisième variante qui vient d'être décrite permet avantageusement de contrôler et de limiter les équipements avec lesquels le terminal maître 100 est susceptible de s'appairer.

La figure 7a, qui montre une représentation schématique d'une mémoire de paramètres d'un point d'accès réseau d'un système de communication complexe selon un aspect de l'invention, est à présent décrite. La figure 7a montre en particulier un exemple de stockage d'informations d'appairage dans la mémoire de paramètre 506 du point d'accès réseau 500, dans le cas où le point d'accès réseau utilise la norme DECT.

La mémoire de paramètres 506 comporte dans un champ 520 l'identifiant du point d'accès réseau 500. Le champ 520 est inscrit de manière permanente lors de la fabrication du point d'accès réseau 500. Le champ 520 est propre au point d'accès réseau 500.

Une zone mémoire 521 contient des paramètres d'appairage de chaque terminal, qu'il s'agisse d'un terminal esclave ou du terminal maître, appairé au point d'accès réseau 500. La zone mémoire 521 est séparée en autant de pages qu'il y a de terminaux appairés au point d'accès réseau 500. Chaque page de la zone mémoire 521 comporte les paramètres d'appairage d'un terminal particulier. La zone mémoire 521 peut être modifiée par ajout d'une page lors de l'appairage d'un nouveau terminal au point d'accès réseau 500, ou par effacement d'une page lors de l'effacement d'un terminal précédemment appairé au point d'accès réseau 500.

L'exemple particulier de la figure 7a montre la zone mémoire 521 à l'issue du procédé 1000 d'appairage automatique selon un aspect de l'invention, qui comprend :
- une page 522 comportant l'identifiant IPUI du premier terminal appairé avec le point d'accès réseau 500, c'est-à-dire le deuxième identifiant natif du terminal maître 100, ainsi que la clé UAK générée lors de cet appairage ;
- une page 523 comportant l'identifiant IPUI du deuxième terminal appairé avec le point d'accès réseau 500, c'est-à-dire l'identifiant natif du premier terminal esclave 200, ainsi que la clé UAK générée lors de cet appairage ;
- une page 524 comportant l'identifiant IPUI du troisième terminal appairé avec le point d'accès réseau 500, c'est-à-dire l'identifiant natif du deuxième terminal esclave 300, ainsi que la clé UAK générée lors de cet appairage.

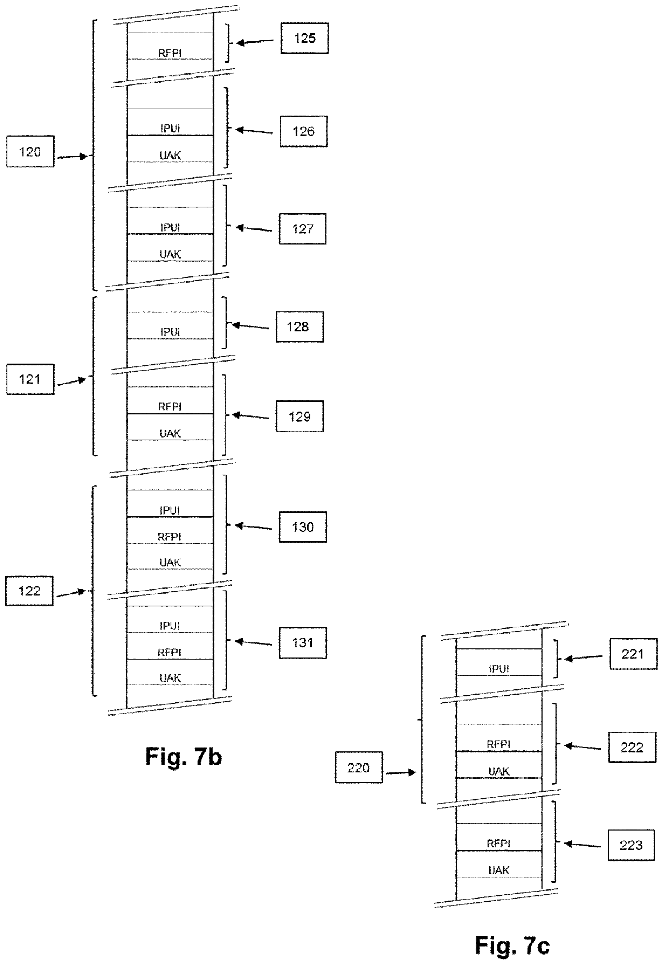

La figure 7b, qui montre une représentation schématique d'une mémoire de paramètres d'un terminal maître d'un système de communication complexe selon un aspect de l'invention, est à présent décrite. La figure 7b montre en particulier un exemple de stockage d'informations d'appairage dans la mémoire de paramètre 106 du terminal maître 106.

La mémoire de paramètre 106 comporte une première zone 120, une deuxième zone 121 et une troisième zone 122.

La première zone 120 comporte des informations uniques, inscrites de manière permanente lors de la fabrication du groupe terminal, et qui sont relatives au fonctionnement du terminal maître 100 lorsque le terminal maître 100 est configuré en point d'accès réseau. La première zone 120 comprend notamment :
- un champ 125 comportant le premier identifiant natif RFPI du terminal maître 100 configuré en point d'accès réseau ;
- une page 126 comportant des paramètres de communication du terminal maître 100 avec le premier terminal esclave 200 et notamment l'identifiant natif IPUI du premier terminal esclave 200 et la clé UAK calculée lors de l'appairage du premier terminal esclave 200 avec le terminal maître 100 ;
- une page 127 comportant des paramètres de communication du terminal maître 100 avec le deuxième terminal esclave 300 et notamment l'identifiant natif IPUI du deuxième terminal esclave 300 et la clé UAK calculée lors de l'appairage du deuxième terminal esclave 300 avec le terminal maître 100.

La deuxième zone 121 comporte des informations relatives au fonctionnement du terminal maître 100 lorsque le terminal maître 100 est configuré en terminal. La deuxième zone 121 comprend notamment :
- un champ 128, inscrit de manière permanente lors de la fabrication du terminal maître 100, comportant le deuxième identifiant natif IPUI du terminal maître 100 configuré en terminal ;
- une page 129 comportant des paramètres de communication du terminal maître 100 avec le point d'accès réseau 500 et notamment l'identifiant RFPI du point d'accès réseau 500 et la clé UAK calculée lors de l'appairage du terminal maître 100 avec le point d'accès réseau 500.

La troisième zone 122 comporte des paramètres d'appairage de chaque terminal esclave du groupe terminal avec le point d'accès réseau, qui ont été obtenus lors de la mise en oeuvre du procédé 1000 d'appairage selon un aspect de l'invention. La troisième zone 122 comprend notamment :
- une page 130 comportant des paramètres d'identification et d'appairage du premier terminal esclave 200 et notamment l'identifiant natif IPUI du premier terminal esclave 200, l'identifiant RFPI du point d'accès réseau 500 et la clé UAK calculée lors de l'appairage avec le point d'accès réseau 500 du terminal maître 100 utilisant l'identifiant natif du premier terminal esclave 200 ;
- une page 131 comportant des paramètres d'identification et d'appairage du deuxième terminal esclave 300 et notamment l'identifiant natif IPUI du deuxième terminal esclave 300, l'identifiant RFPI du point d'accès réseau 500 et la clé UAK calculée lors de l'appairage avec le point d'accès réseau 500 du terminal maître 100 utilisant l'identifiant natif du deuxième terminal esclave 300.

La terminal maître 100 utilise notamment la page 130 dans le procédé 1000 d'appairage automatique selon un aspect de l'invention afin de transmettre au premier terminal esclave 200 ses paramètres d'appairage avec le point d'accès réseau 500. Le terminal maître 100 utilise notamment la page 131 dans le procédé 1000 d'appairage automatique selon un aspect de l'invention afin de transmettre au deuxième terminal esclave 300 ses paramètres d'appairage avec le point d'accès réseau 500.

On note que l'identifiant IPUI de la page 130 est identique à l'identifiant IPUI de la page 126. On note de même que l'identifiant RFPI de la page 130 est identique à l'identifiant RFPI de la page 129. Une optimisation peut donc être effectuée pour supprimer les doublons et ne conserver dans la page 130 que la clé UAK calculée lors de l'appairage avec le point d'accès réseau 500 du terminal maître 100 utilisant l'identifiant du premier terminal esclave 200. De même, la page 131 peut être optimisée en ne conservant dans la page 131 que la clé UAK calculée lors de l'appairage avec le point d'accès réseau 500 du terminal maître 100 utilisant l'identifiant du deuxième terminal esclave 300.

La figure 7c, qui montre une représentation schématique d'une mémoire de paramètres d'un terminal esclave d'un système de communication complexe selon un aspect de l'invention, est à présent décrite. La figure 7c montre en particulier un exemple de stockage d'informations d'appairage dans la mémoire de paramètre 206 du premier terminal esclave 200.

La mémoire de paramètres 206 comprend une zone 220 et une page 223.

La zone 220 comporte des paramètres inscrits de manière permanente lors de la fabrication du groupe terminal. La zone 220 comprend ainsi :
- un champ 221 comportant l'identifiant natif IPUI du premier terminal esclave 200, et
- une page 222 comportant des paramètres d'appairage du premier terminal esclave 200 avec le terminal maître 100 configuré en point d'accès réseau.

Lesdits paramètres d'appairage sont notamment le premier identifiant natif RFPI du terminal maître 100 configuré en point d'accès réseau et la clé UAK calculée lors de l'appairage du terminal esclave 200 avec le terminal maître 100 configuré en point d'accès réseau.

La page 223 comprend des paramètres d'appairage du premier terminal esclave 200 avec le point d'accès réseau 500. Lesdits paramètres d'appairage sont notamment l'identifiant RFPI du point d'accès réseau 500 et la clé UAK calculée lors de l'appairage avec le point d'accès réseau 500 du terminal maître 100 utilisant l'identifiant natif du premier terminal esclave 200.

D'une manière générale, lorsque le premier terminal esclave 200 cesse de recevoir un signal périodique de balise de la part d'un équipement avec lequel il est synchronisé :
- le premier terminal esclave 200 se désynchronise, et
- le premier terminal esclave 200 se positionne dans un état dans lequel il recherche en priorité un signal de balise comportant un identifiant correspondant à l'identifiant qui a été enregistré, lors de sa fabrication, dans sa mémoire de paramètre 106. Dans l'exemple de la figure 7c, il s'agit de l'identifiant RFPI de la page 122.

Ainsi, le premier terminal esclave 200 est capable, en cas de désynchronisation, de se reconnecter avec le terminal maître 100 configuré en station de base.

Si, lors de l'initiation du procédé 1000 d'appairage selon un aspect de l'invention, au moins un terminal esclave du groupe terminal est hors tension ou hors de portée du terminal maître 100 configuré en point d'accès réseau, le procédé 1000 d'appairage selon un aspect de l'invention peut tout de même s'exécuter, par exemple de la manière suivante :
- réalisation des étapes décrites en lien avec la figure 4b, jusqu'à l'étape, incluse, selon laquelle le terminal maître 100 émet à destination de son environnement le signal périodique de balise 162 comportant le premier identifiant natif du terminal maître 100. En effet, jusqu'à cette étape, aucune communication avec un terminal esclave n'est requise.
- Lorsque le terminal esclave considéré est finalement mis sous tension ou est placé à portée du terminal maître 100 configuré en point d'accès réseau, le procédé 1000 d'appairage selon un aspect de l'invention reprend à partir de l'étape, incluse, selon laquelle le terminal esclave considéré capte le signal périodique de balise 162 comportant un identifiant correspondant au premier identifiant natif du terminal maître 100 enregistré dans sa mémoire de paramètre 206, et émet à destination du terminal maître 100 configuré en point d'accès réseau une requête de synchronisation 254.

Dans le cas où au moins une des étapes du procédé d'appairage effectuées par le terminal maître 100 échoue, c'est-à-dire dans le cas où au moins une des étapes 159 à 162 représentées à la figure 4b échoue, le procédé peut simplement être réinitialisé dans son ensemble, car aucun échange n'a été effectué avec le ou les terminaux esclaves du groupe terminal.

Dans le cas où l'étape, selon laquelle le terminal maître 100 transmet à un terminal esclave l'identifiant du point d'accès réseau 500, échoue, le terminal esclave considéré n'émet pas la réponse 257 indiquant que la transmission a réussi. Le terminal maître 100 qui ne reçoit pas la réponse 257 au bout d'un certain délai peut prendre des mesures permettant un retour du système de communication complexe à l'état initial. Le terminal maître 100 peut notamment :
- notifier au point d'accès réseau 500 un effacement du terminal esclave considéré, ou, de manière préférentielle, notifier au point d'accès réseau 500 un effacement du terminal esclave considéré et, le cas échéant, de chaque terminal esclave préalablement appairé, par exemple au moyen d'une requête de type « ACCESS-RIGHT-TERMINATE-REQUEST » selon la norme DECT ;
- rétablir sa configuration de point d'accès réseau.

Le terminal maître 100 peut donc notifier au point d'accès réseau 500 l'effacement uniquement du terminal esclave n'ayant pas répondu. Dans ce cas, l'appairage final est incomplet. De manière préférentielle, le terminal maître 100 notifie au point d'accès réseau 500 l'effacement de tous les terminaux esclaves dès lors qu'au moins un terminal esclave n'a pas répondu. Le procédé d'appairage automatique selon un aspect de l'invention peut alors recommencer.

A chaque étape précédemment décrite en lien avec la figure 4b, l'utilisateur peut être informé d'un état d'avancement du procédé 1000 grâce au moyen 105 d'information avantageusement présent sur le terminal maître 100 et/ou grâce au moins 505 d'information avantageusement présent sur le point d'accès réseau 500.

Chaque terminal d'un groupe terminal ayant été appairé avec le point d'accès réseau grâce au procédé 1000 d'appairage automatique selon un aspect de l'invention, un procédé d'effacement automatique de chaque terminal dudit groupe terminal peut être mené à bien par le terminal maître 100, selon le même principe que le procédé 1000 qui a été décrit. Selon ce procédé d'effacement automatique :
- pour chaque terminal esclave du groupe terminal :
   ∘ le terminal maître 100 remplace son identifiant actuel par l'identifiant natif dudit terminal esclave ;
   ∘ le terminal maître 100, identifié par l'identifiant natif dudit terminal esclave, requiert un effacement auprès du point d'accès réseau 500, par exemple au moyen d'une requête de type « ACCESS-RIGHT-TERMINATE-REQUEST » selon la norme DECT ;
   - le terminal maître 100 reprend son deuxième identifiant natif avec lequel il s'est initialement appairé avec le point d'accès réseau 500 et requiert son propre effacement auprès du point d'accès réseau 500, par exemple au moyen d'une requête de type « ACCESS-RIGHT-TERMINATE-REQUEST » selon la norme DECT.

Un autre aspect de l'invention concerne un système complexe comportant un point d'accès réseau et une pluralité de terminaux sans fil, ladite pluralité comprenant un terminal maître et au moins un terminal esclave, chaque terminal esclave connaissant un premier identifiant natif du terminal maître et le terminal maître connaissant un identifiant natif de chaque terminal esclave, le système complexe étant fonctionnel lorsque chaque terminal de ladite pluralité est appairé au point d'accès réseau, le système complexe étant apte et destiné à mettre en oeuvre le procédé d'appairage automatique précédemment décrit.

La description ci-dessus a en particulier été réalisée dans le cas de l'utilisation du protocole de communication sans fil DECT. D'autres protocoles de communication sans fil, et notamment le protocole Wi-Fi, peuvent naturellement être utilisés sans sortir du périmètre de l'invention.

## Revendications

1. Procédé (1000) d'appairage automatique d'une pluralité de terminaux sans fil (100, 200, 300) d'un système complexe à un point d'accès réseau (500), ladite pluralité (100, 200, 300) comportant un terminal maître (100) et au moins un terminal esclave (200, 300), chaque terminal esclave (200, 300) connaissant un premier identifiant natif du terminal maître (100) et le terminal maître (100) connaissant un identifiant natif de chaque terminal esclave (200, 300), le système complexe étant fonctionnel lorsque chaque terminal de ladite pluralité (100, 200, 300) est appairé au point d'accès réseau (500), le procédé (1000) étant **caractérisé en ce qu'**il comporte :
- une première étape (st1) selon laquelle le terminal maître (100), identifié par un deuxième identifiant natif, s'appaire au point d'accès réseau (500) et le terminal maître (100) enregistre un identifiant du point d'accès réseau (500) ;
- pour chaque terminal esclave (200, 300), une deuxième étape (st2) selon laquelle le terminal maître (100) envoie une requête de relance d'appairage au point d'accès réseau (500) afin que le point d'accès réseau (500) désactive un mode de fonctionnement normal et se positionne dans un mode d'appairage, et :
∘ dans une première sous-étape (st21), le terminal maître (100) remplace son identifiant actuel par l'identifiant dudit terminal esclave (200, 300) ;
∘ dans une deuxième sous-étape (st22), le terminal maître (100), identifié par l'identifiant dudit terminal esclave (200, 300), requiert un appairage avec le point d'accès réseau (500) ;
∘ dans une troisième sous-étape (st23), le point d'accès réseau (500) vérifie un droit d'appairage du terminal esclave (200, 300), valide la requête d'appairage et enregistre l'identifiant du terminal esclave (200, 300), puis désactive son mode d'appairage et se positionne dans son mode de fonctionnement normal ;
- une troisième étape (st3) selon laquelle le terminal maître (100) transmet à chaque terminal esclave (200, 300) l'identifiant du point d'accès réseau.

2. Procédé (1000) selon la revendication précédente **caractérisé en ce que** le terminal maître (100) est configuré dans un premier mode de fonctionnement dit « mode terminal » lors des première et deuxième étapes (st1, st2) et **en ce que** le terminal maître (100) est configuré dans un deuxième mode de fonctionnement dit « mode point d'accès réseau » lors de la troisième étape (st3).

3. Procédé (1000) selon l'une quelconque des revendications précédentes **caractérisé en ce que**, préalablement à la deuxième sous-étape (st22) de la deuxième étape (st2), le terminal maître (100) envoie une requête au point d'accès réseau (500) afin que le point d'accès réseau (500) active un mode d'appairage dans lequel le point d'accès réseau (500) est ouvert aux requêtes d'appairage et informe son environnement qu'il est ouvert aux requêtes d'appairage.

4. Procédé (1000) selon l'une quelconque des revendications 1 ou 2 **caractérisé en ce que**, préalablement à la deuxième sous-étape (st22) de la deuxième étape (st2), le terminal maître (100) envoie une requête au point d'accès réseau (500) afin que le point d'accès réseau (500) active un mode d'appairage dans lequel le point d'accès réseau (500) est ouvert aux requêtes d'appairage mais n'informe pas son environnement qu'il est ouvert aux requêtes d'appairage.

5. Procédé (1000) selon l'une quelconque des revendications 1 ou 2 **caractérisé en ce que**, préalablement à la deuxième sous-étape (st22) de la deuxième étape (st2), le terminal maître (100) envoie une requête au point d'accès réseau (500) afin que le point d'accès réseau (500) active un mode d'appairage dans lequel le point d'accès réseau (500) accepte des requêtes d'appairage particulières et informe son environnement qu'il accepte lesdites requêtes d'appairage particulières.

6. Procédé (1000) selon l'une quelconque des revendications 3 à 5 **caractérisé en ce que**, lorsque le point d'accès réseau (500) active son mode d'appairage, le point d'accès réseau (500) accepte les requêtes d'appairage pendant une fenêtre temporelle inférieure à 10 secondes.

7. Procédé (1000) selon l'une quelconque des revendications 3 ou 5 **caractérisé en ce que** :
- lorsque le point d'accès réseau (500) active son mode d'appairage, le point d'accès réseau (500) informe son environnement qu'il accepte des requêtes d'appairage dans un signal qui comporte également l'identifiant du point d'accès réseau (500) que le terminal maître (100) a enregistré lors de la première étape (st1) ;
- le terminal maître (100) requiert un appairage avec un équipement dès que le terminal maître (100) reçoit un signal comportant :
∘ une information selon laquelle ledit équipement accepte des requêtes d'appairage, et
∘ un identifiant correspondant à un identifiant préalablement enregistré par le terminal maître (100).

8. Terminal maître (100) pour la mise en oeuvre du procédé (1000) d'appairage automatique d'une pluralité de terminaux sans fil (100, 200, 300) d'un système complexe à un point d'accès réseau (500) selon l'une quelconque des revendications précédentes, ladite pluralité (100, 200, 300) comportant le terminal maître (100) et au moins un terminal esclave (200, 300), chaque terminal esclave (200, 300) connaissant un premier identifiant natif du terminal maître (100) et le terminal maître (100) connaissant un identifiant natif de chaque terminal esclave (200, 300), le système complexe étant fonctionnel lorsque chaque terminal de ladite pluralité (100, 200, 300) est appairé au point d'accès réseau (500), le terminal maître (100) comportant :
- des moyens d'appairage au point d'accès réseau (500), le terminal maître (100) étant identifié par un deuxième identifiant natif ;
- des moyens d'enregistrement d'un identifiant du point d'accès réseau (500) ;
- des moyens d'émission d'une requête de relance d'appairage à destination du point d'accès réseau (500) afin que le point d'accès réseau (500) désactive un mode de fonctionnement normal et se positionne dans un mode d'appairage;
- des moyens de remplacement de son identifiant actuel par un identifiant d'un terminal esclave (200, 300) ;
- des moyens d'émission d'une requête d'appairage avec le point d'accès réseau (500), le terminal maître (100) étant identifié par l'identifiant du terminal esclave (200, 300) ;
- des moyens de transmission de l'identifiant du point d'accès réseau (500) à chaque terminal esclave (200, 300).

9. Point d'accès réseau (500) pour la mise en oeuvre du procédé (1000) d'appairage automatique d'une pluralité de terminaux sans fil (100, 200, 300) d'un système complexe à un point d'accès réseau (500) selon l'une quelconque des revendications 1 à 7, ladite pluralité (100, 200, 300) comportant le terminal maître (100) et au moins un terminal esclave (200, 300), chaque terminal esclave (200, 300) connaissant un premier identifiant natif du terminal maître (100) et le terminal maître (100) connaissant un identifiant natif de chaque terminal esclave (200, 300), le système complexe étant fonctionnel lorsque chaque terminal de ladite pluralité (100, 200, 300) est appairé au point d'accès réseau (500), le point d'accès réseau (500) comportant :
- des moyens de réception d'une requête de relance d'appairage émise par le terminal maître (100) afin que le point d'accès réseau (500) désactive un mode de fonctionnement normal et se positionne dans un mode d'appairage;
- des moyens de désactivation d'un mode de fonctionnement normal du point d'accès réseau (500) et de positionnement dans un mode d'appairage du point d'accès réseau (500) ;
- des moyens de réception d'une requête d'appairage émise par le terminal maître (100) identifié par l'identifiant d'un terminal esclave (200, 300) ;
- des moyens de vérification d'un droit d'appairage du terminal esclave (200, 300) ;
- des moyens de validation de la requête d'appairage ;
- des moyens d'enregistrement de l'identifiant du terminal esclave (200, 300) ;
- des moyens de désactivation du mode d'appairage du point d'accès réseau (500) et de positionnement du point d'accès réseau (500) dans son mode de fonctionnement normal.

10. Système complexe comportant le point d'accès réseau (500) selon la revendication 9 et une pluralité de terminaux sans fil (100, 200, 300), ladite pluralité comprenant le terminal maître (100) selon la revendication 8 et au moins un terminal esclave (200, 300), chaque terminal esclave (200, 300) connaissant un premier identifiant natif du terminal maître (100) et le terminal maître (100) connaissant un identifiant natif de chaque terminal esclave (200, 300), le système complexe étant fonctionnel lorsque chaque terminal de ladite pluralité (100, 200, 300) est appairé au point d'accès réseau (500).

## Patentansprüche

1. Verfahren (1000) zum automatischen paarweisen Anordnen einer Vielzahl von drahtlosen Terminals (100, 200, 300) eines komplexen Systems an einem Netzwerkzugangspunkt (500), wobei die genannte Vielzahl (100, 200, 300) ein Masterterminal (100) und wenigstens ein Slave-Terminal (200, 300) umfasst, wobei jedes Slave-Terminal (200, 300) eine erste native Kennung des Master-Terminals (100) kennt und das Master-Terminal (100) eine native Kennung jedes Slave-Terminals (200, 300) kennt, wobei das komplexe System betriebsbereit ist, wenn jedes Terminal der genannten Vielzahl (100, 200, 300) am Netzwerkzugangspunkt (500) paarweise angeordnet ist, wobei das Verfahren (1000) **dadurch gekennzeichnet ist, dass** es umfasst:
- einen ersten Schritt (st1), gemäß dem das Master-Terminal (100), das durch eine zweite native Kennung identifiziert ist, am Netzwerkzugangspunkt (500) paarweise angeordnet ist und das Master-Terminal (100) eine Kennung des Netzwerkzugangspunktes (500) registriert;
- für jedes Slave-Terminal (200, 300) einen zweiten Schritt (st2), gemäß dem das Master-Terminal (100) eine Erinnerungsanfrage zum paarweisen Anordnen am Netzwerkzugangspunkt (500) verschickt, damit der Netzwerkzugangspunkt (500) einen normalen Betriebsmodus deaktiviert und sich in einen paarweisen Anordnungsmodus positioniert, und:
∘ in einem ersten Teilschritt (st21) das Master-Terminal (100) seine aktuelle Kennung durch die Kennung des genannten Slave-Terminals (200, 300) ersetzt;
∘ in einem zweiten Teilschritt (st22) das Master-Terminal (100), das durch die Kennung des genannten Slave-Terminals (200, 300) identifiziert wird, eine paarweise Anordnung mit dem Netzwerkzugangspunkt (500) fordert an;
∘ in einem dritten Teilschritt (st23) der Netzwerkzugangspunkt (500) ein paarweises Anordnungsrecht des Slave-Terminals (200, 300) überprüft, die paarweise Anordnungsanforderung validiert und die Kennung des Slave-Terminals (200, 300) registriert, dann seinen paarweisen Anordnungsmodus deaktiviert und sich in seinem normalen Betriebsmodus positioniert;
- einen dritten Schritt (st3), gemäß dem das Master-Terminal (100) die Kennung des Netzwerkzugangspunktes auf jedes Slave-Terminal (200, 300) überträgt.

2. Verfahren (1000) gemäß dem voranstehenden Anspruch, **dadurch gekennzeichnet, dass** das Master-Terminal (100) in den ersten und zweiten Schritten (st1, st2) in einem als "Terminalmodus" bezeichneten ersten Betriebsmodus konfiguriert ist und dass das Master-Terminal (100) in dem dritten Schritt (st3) in einem als "Netzwerkzugangspunktmodus" bezeichneten zweiten Betriebsmodus konfiguriert ist.

3. Verfahren (1000) gemäß irgendeinem der voranstehenden Ansprüche, **dadurch gekennzeichnet, dass** das Master-Terminal (100) vor dem zweiten Teilschritt (st22) des zweiten Schritts (st2) eine Anfrage an den Netzwerkzugangspunkt (500) sendet, damit der Netzwerkzugangspunkt (500) einen paarweisen Anordnungsmodus aktiviert, in dem der Netzwerkzugangspunkt (500) für paarweise Anordnungsanforderungen offen ist und seine Umgebung informiert, dass er für die paarweisen Anordnungsanforderungen offen ist.

4. Verfahren (1000) gemäß irgendeinem der Ansprüche 1 oder 2, **dadurch gekennzeichnet, dass** das Master-Terminal (100) vor dem zweiten Teilschritt (st22) des zweiten Schritts (st2) eine Anforderung an den Netzwerkzugangspunkt (500) sendet, damit der Netzwerkzugangspunkt (500) einen paarweisen Anordnungsmodus aktiviert, in dem der Netzwerkzugangspunkt (500) für die paarweisen Anordnungsanforderungen offen ist, jedoch seine Umgebung nicht informiert, dass er für die paarweisen Anordnungsanforderungen offen ist.

5. Verfahren (1000) gemäß irgendeinem der Ansprüche 1 oder 2, **dadurch gekennzeichnet, dass** das Master-Terminal (100) vor dem zweiten Teilschritt (st22) des zweiten Schritts (st2) eine Anforderung an den Netzwerkzugangspunkt (500) sendet, damit der Netzwerkzugangspunkt (500) einen paarweisen Anordnungsmodus aktiviert, in dem der Netzwerkzugangspunkt (500) besondere paarweise Anordnungsanforderungen akzeptiert und seine Umgebung informiert, dass er die genannten besonderen paarweisen Anordnungsanforderungen akzeptiert.

6. Verfahren (1000) gemäß irgendeinem der Ansprüche 3 bis 5, **dadurch gekennzeichnet, dass**, wenn der Netzwerkzugangspunkt (500) seinen paarweisen Anordnungsmodus aktiviert, der Netzwerkzugangspunkt (500) die paarweisen Anordnungsanforderungen während eines vorübergehenden Fensters von weniger als 10 Sekunden akzeptiert.

7. Verfahren (1000) gemäß irgendeinem der Ansprüche 3 oder 5, **dadurch gekennzeichnet, dass**:
- wenn der Netzwerkzugangspunkt (500) seinen paarweisen Anordnungsmodus aktiviert, der Netzwerkzugangspunkt (500) seine Umgebung informiert, dass er paarweise Anordnungsanforderungen in einem Signal akzeptiert, das ebenfalls die Kennung des Netzwerkzugangspunktes (500) umfasst, das das Master-Terminal (100) bei dem ersten Schritt (st1) registriert hat;
- das Master-Terminal (100) eine paarweise Anordnung mit einer Ausrüstung anfordert, sobald das Master-Terminal (100) ein Signal empfängt, umfassend:
∘ eine Information, nach der die genannte Ausrüstung paarweise Anordnungsanforderungen akzeptiert und
∘ eine Kennung, die einer Kennung entspricht, die zuvor von dem Master-Terminal (100) registriert worden ist.

8. Master-Terminal (100) für die Umsetzung des Verfahrens (1000) zum automatischen paarweisen Anordnen einer Vielzahl von drahtlosen Terminals (100, 200, 300) eines komplexen Systems an einem Netzwerkzugangspunkt (500) gemäß irgendeinem der voranstehenden Ansprüche, wobei die genannte Vielzahl (100, 200, 300) das Master-Terminal (100) und wenigstens ein Slave-Terminal (200, 300) umfasst, wobei jedes Slave-Terminal (200, 300) eine erste native Kennung des Master-Terminals (100) kennt und das Master-Terminal (100) eine native Kennung jedes Slave-Terminals (200, 300) kennt, wobei das komplexe System betriebsbereit ist, wenn jedes Terminal der genannten Vielzahl (100, 200, 300) am Netzwerkzugangspunkt (500) paarweise angeordnet ist, wobei das Master-Terminal (100) umfasst:
- paarweise Anordnungsmittel am Netzwerkzugangspunkt (500), wobei das Master-Terminal (100) durch eine zweite native Kennung identifiziert ist;
- Registrierungsmittel einer Kennung des Netzwerkzugangspunkts (500);
- Sendemittel einer Erinnerungsanforderung zur paarweisen Anordnung an einen Netzwerkzugangspunkt (500), damit der Netzwerkzugangspunkt (500) einen normalen Betriebsmodus deaktiviert und sich in einem paarweisen Anordnungsmodus positioniert;
- Ersatzmittel seiner aktuellen Kennung durch eine Kennung eines Slave-Terminals (200, 300);
- Sendemittel einer paarweisen Anordnungsanforderung mit dem Netzwerkzugangspunkt (500), wobei das Master-Terminal (100) durch die Kennung des Slave-Terminals (200, 300) identifiziert ist;
- Übertragungsmittel der Kennung des Netzwerkzugangspunktes (500) an jedem Slave-Terminal (200, 300).

9. Netzwerkzugangspunkt (500) für die Umsetzung des Verfahrens (1000) zum automatischen paarweisen Anordnen einer Vielzahl von drahtlosen Terminals (100, 200, 300) eines komplexen Systems an einem Netzwerkzugangspunkt (500) gemäß irgendeinem der Ansprüche 1 bis 7, wobei die genannte Vielzahl (100, 200, 300) das Master-Terminal (100) und wenigstens ein Slave-Terminal (200, 300) umfasst, wobei jedes Slave-Terminal (200, 300) eine erste native Kennung des Master-Terminals (100) kennt und das Master-Terminal (100) eine native Kennung jedes Slave-Terminals (200, 300) kennt, wobei das komplexe System betriebsbereit ist, wenn jedes Terminal der genannten Vielzahl (100, 200, 300) am Netzwerkzugangspunkt (500) paarweise angeordnet ist, wobei der Netzwerkzugangspunkt (500) umfasst:
- Empfangsmittel einer Erinnerungsanforderung zur paarweisen Anordnung, die durch ein Master-Terminal (100) ausgegeben wird, damit der Netzwerkzugangspunkt (500) einen normalen Betriebsmodus deaktiviert und sich in einen paarweisen Anordnungsmodus positioniert;
- Deaktivierungsmittel eines normalen Betriebsmodus des Netzwerkzugangspunktes (500) und Positionierungsmittel in einem paarweisen Anordnungsmodus des Netzwerkzugangspunktes (500);
- Empfangsmittel einer paarweisen Anordnungsanforderung, die von dem Master-Terminal (100) ausgegeben wird, das durch die Kennung eines Slave-Terminals (200, 300) identifiziert ist;
- Überprüfungsmittel eines paarweisen Anordnungsrechts des Slave-Terminals (200, 300);
- Validierungsmittel der paarweisen Anordnungsanforderung;
- Registrierungsmittel der Kennung des Slave-Terminals (200, 300);
- Deaktivierungsmittel des paarweisen Anordnungsmodus des Netzwerkzugangspunktes (500) und des Positionierungsmodus des Netzwerkzugangspunktes (500) in seinem normalen Betriebsmodus.

10. Komplexes System, umfassend den Netzwerkzugangspunkt (500) gemäß Anspruch 9 und eine Vielzahl von drahtlosen Terminals (100, 200, 300), wobei die genannte Vielzahl das Master-Terminal (100) gemäß Anspruch 8 und wenigstens ein Slave-Terminal (200, 300) umfasst, wobei jedes Slave-Terminal (200, 300) eine erste native Kennung des Master-Terminals (100) kennt und das Master-Terminal (100) eine native Kennung jedes Slave-Terminals (200, 300) kennt, wobei das komplexe System betriebsbereit ist, wenn jedes Terminal der genannten Vielzahl (100, 200, 300) am Netzwerkzugangspunkt (500) paarweise angeordnet ist.

## Claims

1. A method (1000) for automatically pairing a plurality of wireless terminals (100, 200, 300) of a complex system to a network access point (500), said plurality (100, 200, 300) including a master terminal (100) and at least one slave terminal (200, 300), each slave terminal (200, 300) knowing a first native identifier of the master terminal (100) and the master terminal (100) knowing a native identifier of each slave terminal (200, 300), the complex system being functional when each terminal of said plurality (100, 200, 300) is paired with the network access point (500), the method (1000) being **characterized in that** it includes:
- a first step (st1) wherein the master terminal (100), identified by a second native identifier, pairs with the network access point (500) and the master terminal (100) records an identifier of the network access point (500);
- for each slave terminal (200, 300), a second step (st2) wherein the master terminal (100) sends a pairing retry request to the network access point (500) so that the network access point (500) deactivates a normal operating mode and sets in a pairing mode, and:
∘ in a first sub-step (st21), the master terminal (100) replaces its current identifier with the identifier of said slave terminal (200, 300);
∘ in a second sub-step (st22), the master terminal (100), identified by the identifier of said slave terminal (200, 300), requires a pairing with the network access point (500);
∘ in a third sub-step (st23), the network access point (500) checks a pairing right of the slave terminal (200, 300), validates the pairing request and records the identifier of the slave terminal (200, 300), and then deactivates its pairing mode and sets in its normal operating mode;
- a third step (st3) wherein the master terminal (100) transmits the identifier of the network access point to each slave terminal (200, 300).

2. The method (1000) according to the preceding claim, **characterized in that** the master terminal (100) is configured in a first operating mode called a "terminal mode" during the first and second steps (st1, st2) and **in that** the master terminal (100) is configured in a second operating mode called a "network access point mode" during the third step (st3).

3. The method (1000) according to one of the preceding claims, **characterized in that**, prior to the second sub-step (st22) of the second step (st2), the master terminal (100) sends a request to the network access point (500) so that the network access point (500) activates a pairing mode in which the network access point (500) is open to the pairing requests and notifies its environment that it is open to pairing requests.

4. The method (1000) according to any of claims 1 or 2, **characterized in that**, prior to the second sub-step (st22) of the second step (st2), the master terminal (100) sends a request to the network access point (500) so that the network access point (500) activates a pairing mode in which the network access point (500) is open to the pairing requests but does not notify its environment that it is open to pairing requests.

5. The method (1000) according to any of claims 1 or 2, **characterized in that**, prior to the second sub-step (st22) of the second step (st2), the master terminal (100) sends a request to the network access point (500) so that the network access point (500) activates a pairing mode in which the network access point (500) accepts particular pairing requests and notifies its environment that it accepts said particular pairing requests.

6. The method (1000) according to any of claims 3 to 5, **characterized in that**, when the network access point (500) activates its pairing mode, the network access point (500) accepts the pairing requests during a time window lower than 10 seconds.

7. The method (1000) according to any of claims 3 or 5, **characterized in that**:
- when the network access point (500) activates its pairing mode, the network access point (500) notifies its environment that it accepts pairing requests in a signal which also includes the identifier of the network access point (500) that the master terminal (100) has recorded during the first step (st1);
- the master terminal (100) requires a pairing with a piece of equipment as soon as the master terminal (100) receives a signal including:
∘ a piece of information according to which said piece of equipment accepts pairing requests, and
∘ an identifier corresponding to an identifier previously recorded by the master terminal (100).

8. A master terminal (100) for implementing the method (1000) for automatically pairing a plurality of wireless terminals (100, 200, 300) of a complex system to a network access point (500) according to any of the preceding claims, said plurality (100, 200, 300) including the master terminal (100) and at least one slave terminal (200, 300), each slave terminal (200, 300) knowing a first native identifier of the master terminal (100) and the master terminal (100) knowing a native identifier of each slave terminal (200, 300), the complex system being functional when each terminal of said plurality (100, 200, 300) is paired with the network access point (500), the master terminal (100) including:
- means for pairing to the network access point (500), the master terminal (100) being identified by a second native identifier;
- means for recording an identifier of the network access point (500);
- means for emitting a pairing retry request to the network access point (500) so that the network access point (500) deactivates a normal operating mode and sets in a pairing mode;
- means for replacing its current identifier with an identifier of a slave terminal (200, 300);
- means for emitting a pairing request with the network access point (500), the master terminal (100) being identified by the identifier of the slave terminal (200, 300);
- means for transmitting the identifier of the network access point (500) to each slave terminal (200, 300).

9. A network access point (500) for implementing the method (1000) for automatically pairing a plurality of wireless terminals (100, 200, 300) of a complex system to a network access point (500) according to any of claims 1 to 7, said plurality (100, 200, 300) including the master terminal (100) and at least one slave terminal (200, 300), each slave terminal (200, 300) knowing a first native identifier of the master terminal (100) and the master terminal (100) knowing a native identifier of each slave terminal (200, 300), the complex system being functional when each terminal of said plurality (100, 200, 300) is paired with the network access point (500), the network access point (500) including:
- means for receiving a pairing retry request emitted by the master terminal (100) so that the network access point (500) deactivates a normal operating mode and sets in a pairing mode;
- means for deactivating a normal operating mode of the network access point (500) and setting in a pairing mode of the network access point (500);
- means for receiving a pairing request emitted by the master terminal (100) identified by the identifier of a slave terminal (200, 300);
- means for checking a pairing right of the slave terminal (200, 300);
- means for validating the pairing request;
- means for recording the identifier of the slave terminal (200, 300);
- means for deactivating the pairing mode of the network access point (500) and setting the network access point (500) in its normal operating mode.

10. A complex system including the network access point (500) according to claim 9 and a plurality of wireless terminals (100, 200, 300), said plurality comprising the master terminal (100) according to claim 8 and at least one slave terminal (200, 300), each slave terminal (200, 300) knowing a first native identifier of the master terminal (100) and the master terminal (100) knowing a native identifier of each slave terminal (200, 300), the complex system being functional when each terminal of said plurality (100, 200, 300) is paired to the network access point (500).
